# EUROPÄISCHE PATENTSCHRIFT

(11) **EP 1 036 656 B1**
(45) Veröffentlichungstag und Bekanntmachung des Hinweises auf die Patenterteilung: **27.07.2005**
(21) Anmeldenummer: 00810210.5
(22) Anmeldetag: 13.03.2000
(51) Int. Cl.: B41C 1/10

(54) **Belichtungsverfahren und Belichtungsvorrichtung zur Bebilderung einer Druckform für einen Nassoffsetdruck**
Exposure method and apparatus for imaging a printing plate for wet offset printing
Procédé et dispositif d'exposition pour produire une image sur une plaque d'impression pour l'impression offset humide

(30) Priorität: 17.03.1999 DE 19911907
(43) Veröffentlichungstag der Anmeldung: 20.09.2000
(73) Patentinhaber: Maschinenfabrik Wifag, 3001 Bern (CH)
(72) Erfinder: Riepenhoff, Matthias, 3015 Bern (CH); Jiang, Yufan, 3007 Bern (CH)

(56) Entgegenhaltungen:
- EP-A- 0 770 495
- US-A- 5 535 672
- PATENT ABSTRACTS OF JAPAN vol. 013, no. 382 (P-923), 24. August 1989 (1989-08-24) & JP 01 133018 A (MATSUSHITA ELECTRIC IND CO LTD), 25. Mai 1989 (1989-05-25)

## Beschreibung

Die Erfindung betrifft ein Verfahren und eine Vorrichtung zur Bebilderung einer Druckform für einen Nassoffsetdruck. Insbesondere wird die Erfindung im Zeitungsoffsetdruck, vorzugsweise Zeitungsoffsetrollendruck, eingesetzt.

Im Zeitungsoffset hat sich infolge der fortschreitenden Entwicklung der Computertechnologie der Vorstufenbereich stark verändert. Arbeitsgänge, die bislang manuell durchgeführt wurden, sind durch sogenannte Computer-To-Technologien ersetzt worden. Die derzeit aktuelle Entwicklungsstufe ist im Zeitungsbereich mit Computer-To-Plate erreicht worden. Die Weiterentwicklung geht in Richtung Computer-To-Press, d.h. in Richtung einer Direktbebilderung in der Maschine.

Ein direkt bebilderbarer Druckformzylinder ist aus der US-PS 5 293 817 bekannt. Der Druckformzylinder weist einen porösen Außenmantel auf. Die Feuchtung erfolgt durch das Innere des Zylinders durch den porösen Außenmantel hindurch. Die Porösität des Zylindermantels liegt zwischen 20 und 45%. Der Durchmesser der Poren des Zylindermantels nimmt zur Außenseite des Zylindermantels hin ab und liegt zwischen 3 und 100 µm. Die Poren des Zylindermantels kommunizieren miteinander. Die Bebilderung erfolgt über ein Thermotransfer-oder ein Inkjetverfahren mittels einer Bildinformations-Übertragungseinrichtung. Als Alternative wird die Verwendung einer erhitzten Elektrode in Pinform erwähnt, um oleophiles Material auf den Zylindermantel aufzutragen.

Ferner beschreibt die US 5,535,672 ein Verfahren und eine Vorrichtung für die Laserstrahlgravur für eine Rasterdruckform mit mehreren Rasterreihen auf einer Oberfläche eines sich drehenden Formzylinders. Dabei wird der An/Aus-Zustand der sich entlang der Drehachse des Formzylinders bewegenden Halbleiter-Lasereinrichtung in Abhängigkeit von Bildinformationen so gesteuert, dass die bildmässige Gravur eine bestimmte Rasterwinkelung bildet. Zusätzlich zur Bildung von Halbtonpunkten wird mit der Veränderung der Laserstrahlmenge die Tiefe der Gravur bestimmt, entsprechend der Graustufen der Bildinformationen. Mit dieser Massnahme soll die Bildung von Moiré-Mustern im Mehrfarbendruck verhindert werden.

Die Erfindung hat es sich zur Aufgabe gemacht, eine Belichtung zur Bebilderung einer Druckform für einen Nassoffsetdruck auf preiswerte und präzise Weise zu ermöglichen.

Diese Aufgabe wird durch die Gegenstände der unabhängigen Ansprüche gelöst.

Die Erfindung geht von einer Bebilderung einer Druckform für einen Nassoffsetdruck aus, bei der an einer unbebilderten Oberfläche der Druckform ein Druckbild durch Ausbildung von farbannehmenden und farbabweisenden Stellen erzeugt wird. Die Oberfläche wird im bebilderten und auch im unbebilderten Zustand wegen ihrer Funktion der Übertragung von Farbe im Folgenden als farbübertragende Oberfläche bezeichnet.

Zur Bebilderung der Druckform führen die Druckform und eine Bildübertragungsvorrichtung eine nach Richtung und Geschwindigkeit vorgegebene Relativbewegung aus, bei der die zu bebildernde Oberfläche der Druckform pixelweise bildgemäss belichtet wird.

Nach der Erfindung umfasst die Bildübertragungseinrichtung eine Belichtungsvorrichtung mit einem Array oder mehrere Arrays von gepulsten bezw. stromgepumpten Halbleiterlasern, insbesondere gepulsten Infrarotlasern, besonders bevorzugt Laserdioden. Mittels der Laser werden schmale, streifenförmige, vorzugsweise rechteckförmige Laserspots an der zu bebildernden Oberfläche erzeugt, die auf der zu bebildernden Oberfläche je eine in Richtung der Relativbewegung gemessene Laserspotbreite aufweisen, die mehrfach kleiner ist als eine in die gleiche Richtung gemessene Breite eines Bildpixels der zu bebildernden Oberfläche und auch mehrfach kleiner ist als eine quer zu der Laserspotbreite gemessene Laserspotlänge. Dabei kann die Laserspotlänge (Ls) oder die Breite des Bildpixels ein ganz- oder unganzzahliges Vielfaches der Laserspotbreite (Bs) sein. Eine Pulsdauer pro Laserspot ist dann mehrfach länger als eine Zeitdauer, in der bei der Relativbewegung zwischen Druckform und dem Laserarray eine Wegstrecke zurückgelegt wird, die der Laserspotbreite entspricht. Die Pulsdauer kann wiederum ein ganz- oder unganzzahliges. Vielfach dieser Zeitdauer sein, beträgt aber wenigstens das Zweifache dieser Zeitdauer.

Die Pixel des zu erzeugenden Druckbildes sind in Spalten und dazu senkrechten Zeilen auf der farbübertragenden Oberfläche der Druckform angeordnet. Eine Pixelspalte verläuft demnach in Spaltenrichtung und eine Pixelzeile in eine dazu senkrechte Zeilenrichtung. Die vorstehend genannten Relativbewegungen findet entweder in Spaltenrichtung oder in Zeilenrichtung statt. Handelt es sich bei der Druckform um die Druckform eines Druckformzylinders in einer Rotationsdruckmaschine, so ist die Spaltenrichtung die Druckrichtung und die Zeilenrichtung die Zylinderlängsrichtung. Bei einer Bebilderung in der Maschine ist die Richtung der Relativbewegung, auf die die Breiten- und Längenangaben der lichtemittierenden Fläche bezogen sind, die Druckrichtung. Denkbar ist jedoch auch eine Bebilderung einer Druckform ausserhalb einer Maschine, in der eine Bebilderung ebenso in Zeilenrichtung als massgebliche Richtung der Relativbewegung vorgenommen werden kann.

Der streifenförmige Laserspot kann vorteilhafterweise auch dazu genutzt werden, die Flächendeckung und damit auch die Tonwertstufen besonders fein einzustellen, ohne die Geometrie einer optischen Abbildungseinrichtung zur Fokusierung des Laserlichts auf der farbübertragenden Oberfläche zu verändern. Durch Veränderung, insbesondere Verkürzung, der Einschaltdauer der Halbleiterlaser können Pixel beliebiger Erstreckung in Richtung der Relativbewegung erzeugt werden. Insbesondere können Pixel erzeugt werden, die sehr kleine Flächen aufweisen, die dann jedoch nicht quadratisch, sondern streifenförmig sind. Bekanntermaßen ergibt sich aus Rasterweite und Pixelfläche die Zahl der Graustufen, die dargestellt werden können. Hierbei gilt, dass die Rasterzellenbreite gleich dem Kehrwert der Rasterweite ist. Die Fläche der Rasterzelle errechnet sich hieraus durch Quadrieren. Wird das Ergebnis durch die Pixelfläche dividiert, erhält man die Zahl der maximal darstellbaren Tonwerte. So hat eine Rasterzelle beispielsweise bei einem 40er Raster eine Fläche von 250*250 µm². Bei einer Pixelbreite von 62 µm können im Fall quadratischer Pixel maximal 16 Graustufen dargestellt werden. Werden rechteckförmige Pixel von 62 µm * 31 µm erzeugt, so sind es bereits 32 Graustufen. Die Bebilderungszeit ist in beiden Fällen gleich. Die feinere Abstufung der Tonstufen ermöglicht es, im Druck auftretende Nichtlinearitäten, wie Tonwertzu- und abnahmen, besser auszugleichen als dies mit Laserspots möglich ist, die in Richtung der Relativbewegung die erfindungsgemäß sehr kurze Erstreckung nicht aufweisen. Ist die Druckform an einem Druckformzylinder angeordnet, so weist für diesen Ausgleich ein Winkelgeber für den Druckformzylinder oder einen zugeordneten Gummituchzylinder eine entsprechend höhere Auflösung auf, oder es werden Zwischeninkremente mit einer Elektronik durch Interpolation gebildet.

Nach der Erfindung umfasst die Bildübertragungseinrichtung eine Belichtungsvorrichtung mit einem Array oder mehreren Arrays von gepulsten bzw. stromgepumpten Halbleiterlasern, insbesondere gepulsten Infrarotlasern, besonders bevorzugt Laserdioden. Mittels der Laser werden schmale, streifenförmige, vorzugsweise rechteckförmige Laserspots an der zu bebildernden Oberfläche erzeugt, die auf der zu bebildernden Oberfläche je eine in Richtung der Relativbewegung gemessene Laserspotbreite aufweisen, die mehrfach kleiner ist als eine in die gleiche Richtung gemessene Breite eines Bildpixels der zu bebildernden Oberfläche und auch mehrfach kleiner ist als eine quer zu der Laserspotbreite gemessene Laserspotlänge. Eine Pulsdauer pro Laserspot ist dann mehrfach länger als eine Zeitdauer, in der bei der Relativbewegung zwischen der Druckform und dem Laserarray eine Wegstrecke zurückgelegt wird, die der Laserspotbreite entspricht.

In einer bevorzugten Ausführungsform erfolgt die Bebilderung in der Maschine direkt am Druckformzylinder. In diesem Fall wird die Relativbewegung zwischen der Druckform und dem Laserarray durch eine Vertikalbewegung durch Rotation des Druckformzylinders und eine hierzu senkrechte Horizontalbewegung durch Verschiebung des Laserarrays bewirkt. Bei der Rotation des Druckformzylinders wird die Bildinformation spaltenweise auf die Druckform übertragen. Durch Horizontalverschieben des Laserarrays werden nacheinander nebeneinanderliegende Spalten bebildert, bis das ganze Bild aufgezeichnet ist. Die mittels der Laser auf der farbübertragenden Oberfläche der Druckform erzeugten Laserspots weisen dann eine in vertikaler Richtung gemessene Breite und eine in horizontaler Richtung gemessene Länge auf. Bei der Bebilderung erfolgt die Horizontalbewegung des Laserarrays bei rotierendem Druckformzylinder vorzugsweise kontinuierlich. Auf diese Weise können optimal kurze Bebilderungszeiten erhalten werden.

Zur Erzeugung eines streifenförmigen Laserspots werden Halbleiterlaser mit schmalen, streifenförmigen, vorzugsweise rechteckförmigen, lichtemittierenden Flächen verwendet, wie Infrarot Laserdioden sie insbesondere aufweisen. Das emittierte Laserlicht wird über eine optische Abbildungseinrichtung auf die farbübertragende Oberfläche fokussiert. Durch die bevorzugte langgestreckte Streifenform des Laserspots, der hierdurch ermöglichten Verwendung einer einfachen Optik in Verbindung mit der entsprechend schmalen Streifenform der lichtemittierenden Flächen und der langen Pulsdauer pro Bildpixel kann die Laserleistung gering gehalten werden. Der Energieverbrauch ist trotz der längeren Pulsdauer ebenfalls niedriger als bei Ausbildung des Laserspots unmittelbar in oder angenähert in der Form des Bildpixels des auf der farbübertragenden Oberfläche zu erzeugenden Druckbilds.

Dementsprechend umfasst die Belichtungsvorrichtung gepulste bzw. stromgepumpte Halbleiterlaser, insbesondere Infrarot Laser, besonders bevorzugt Infrarot Laserdioden, mit lichtemittierenden, streifenförmigen, vorzugsweise rechteckförmigen Flächen, die eine in Richtung der Relativbewegung gemessene Breite aufweisen, die mehrfach kleiner ist als eine in die gleiche Richtung gemessene Breite eines Bildpixels auf der zu bebildernden Oberfläche und auch mehrfach kleiner ist als eine Länge der lichtemittierenden Fläche.

Die Laser emittieren vorzugsweise im infraroten oder sichtbaren Bereich, insbesondere im Wellenlängenbereich von 700-1400 nm.

Für die lichtemittierenden Flächen ist eine optische Abbildungseinrichtung, vorzugsweise mit wenigstens einer Linse pro lichtemittierender Fläche vorgesehen. Eine einzige Linse oder zwei Linsen pro lichtemittierender Fläche entsprechen bevorzugten Ausführungsbeispielen. Bevorzugt sind Linsen der Abbildungseinrichtung in Form eines oder mehrerer Arrays angeordnet, vorteilhafterweise als ein oder mehrere Linsenarrays aus Kunststoff, die preiswert in Massenherstellung gefertigt und einfach montiert werden können. Die Laser sind in oder an einem Gehäuse in solch einer Ausrichtung zueinander befestigt, dass ihre lichtemittierenden Flächen parallele Längsrichtungen aufweisen. Schließlich umfasst die Belichtungsvorrichtung eine Ansteuerelektronik, mit der die Laser so angesteuert werden, dass eine Laserpulsdauer mehrfach länger ist als eine Zeitdauer, in der bei der Relativbewegung eine Wegstrecke zurückgelegt wird, die der Breite der lichtemittierenden Fläche entspricht.

Einen Faserausgang benötigt die Belichtungsvorrichtung nicht. Auch dies macht die Vorrichtung preiswert und erhöht ihren Wirkungsgrad. Ein Laserträger der Belichtungsvorrichtung wird vorzugsweise wassergekühlt.

Die Auflösung der Belichtungsvorrichtung ist abhängig von der Wegstrecke, um die das Laserarray während einer Zylinderumdrehung verschoben wird. Diese Wegstrecke beträgt vorzugsweise zwischen 84 und 28 µm. Dies entspricht einer bevorzugten Auflösung von 300 bis 900 dpi. Die Laserspotlänge beträgt vorzugsweise 30 bis 90 µm, und die Laserspotbreite beträgt vorzugsweise 1 bis 10 µm. Die Laserpulsdauer beträgt zwischen 1 und 50 µs, abhängig von der Auflösung der Vorrichtung, der Leistung der Halbleiterlaser und der Bebilderungsgeschwindigkeit. Die Bebilderung erfolgt durch axiale Verschiebung des wenigstens einen Arrays entlang des bei der Bebilderung rotierenden Druckformzylinders. Das Lasergesamtarray kann durch austauschbare Module mit beispielsweise 64 Halbleiterlasern pro Druckzone gebildet werden.

Das Verhältnis von Laserspotlänge zu Laserspotbreite beträgt vorzugsweise wenigstens 10:1 und besonders bevorzugt wenigstens 20:1.

Ein Vorteil der erfmdungsgemäßen Belichtungsvorrichtung ist, dass eine mechanisch genaue Justierung nicht erforderlich ist. Es wird vorzugsweise eine Software-Justierung vorgenommen.

Die Belichtungsvorrichtung umfasst vorzugsweise ein Array oder mehrere Arrays von beispielsweise 256 Lasern in 4 Arrays mit je 64 Halbleiterlasern für eine Druckzone.

Eine Ansteuerelektronik für die Belichtungsvorrichtung umfasst vorzugsweise ausreichend Speicherkapazität für zwei Bitmaps, nämlich ein Bitmap für ein aktuelles Bild und das wenigstens zweite Bitmap für ein folgendes Bild. Ferner umfasst die Ansteuerelektronik eine Leistungselektronik für jeden der Laser. Die Ansteuerelektronik ist an einen Positionsgeber des Druckformzylinders gekoppelt, von dem sie die Drehwinkelposition des Druckformzylinders oder eines zugeordneten Gummituchzylinders und die Position des Arrays, vorzugsweise von jedem Array-Modul, empfängt, um die Laserimpulse mit der Bewegung des Druckformzylinders zu synchronisieren. Zur Datenübernahme ist die Ansteuerelektronik an einen Server-PC gekoppelt.

Während das aktuelle Bild gedruckt wird, kann das neue Bild in den Speicher der Ansteuerelektronik geladen werden. Das neue Bild steht somit bereits während der laufenden Produktion für die nächste Produktion innerhalb der Ansteuerelektronik zur Verfügung. Nach dem Bebildern der Druckform, spätestens jedoch nach Beendigung der laufenden Produktion, wird der Speicher des alten Bilds freigemacht und kann die Daten für die übernächste Produktion übernehmen. Der Speicher des neuen Bilds wird für die nächste Produktion zum Speicher des aktuellen Bilds und der Speicher des zuvor aktuellen Bilds zum Speicher für das neue Bild. Die Ansteuerelektronik ist vorzugsweise integrierter Bestandteil der Belichtungsvorrichtung unmittelbar am Ort des Laserarrays; sie wird vorzugsweise mitbewegt.

Auf Maschinenebene erhält ein oder erhalten mehrere Server-Computer die separierten und gerasterten Bilddaten in Form von Bitmaps. Jedem Server sind ein oder mehrere Druckwerke der Maschine zugeordnet. Die Datenübertragung an die Ansteuerelektronik erfolgt über ein schnelles lokales Netz.

In einem ersten bevorzugten Verfahren erfolgt die Erzeugung des Druckbilds, d.h. die Bebilderung, indem die noch unbebilderte farbübertragende Oberfläche mit einem Feuchtmittel benetzt wird, diejenigen Stellen der gefeuchteten Oberfläche, die farbannehmend auszubilden sind, gezielt, d.h. bildgemäß, getrocknet werden und anschließend Material, das Druckfarbe annimmt und Feuchtmittel vorzugsweise abweist, auf die farbübertragende Oberfläche mit den noch trockenen Stellen aufgetragen wird. Das Material wird, wie Druckfarbe auch, von dem Feuchtmittel abgewiesen, d.h. es wird auf die feuchten Stellen nicht übertragen. Da eine Feuchmittelzufuhr vorzugsweise gleichmäßig und kontinuierlich auch während der Bebilderung erfolgt, wird das Material vorzugsweise so rasch wie möglich nach der bildgemäßen Trocknung der farbübertragenden Oberfläche aufgetragen, so dass die getrockneten Stellen nicht vor dem Auftragen des farbannehmenden Materials wieder mit Feuchtmittel benetzt sind.

Ein Feuchtmittelfilm, der die farbübertragende Oberfläche benetzt, sollte, gemittelt über die Fläche eines Bildpixels, höchstens 1 µm dick sein, um die Verdampfungsenergie gering zu halten. Vorzugsweise wird die Dicke auf einen Wert zwischen 0.2 bis 0.5 µm eingestellt.

Das Verfahren kann so abgewandelt werden, dass zur Bebilderung zunächst ein fließfähiges Material gleichmäßig auf die farbübertragende Oberfläche aufgetragen wird, das Druckfarbe annimmt und Feuchtmittel vorzugsweise abweist, dieses Material dann gezielt an den farbannehmend auszubildenden Stellen erhärtet bzw. zum Härten gebracht und an den farbabweisend auszubildenden Stellen, wo es noch fließfähig ist, mittels Feuchtmittel entfernt wird.

Die beiden genannten Verfahrensalternativen weisen den Vorteil auf, dass zunächst die farbübertragende Oberfläche gleichmäßig benetzt bzw. bedeckt wird, wofür einmal Feuchtwasser und einmal farbannehmendes und feuchtmittelabweisendes Material verwendet wird, und dann die gleichmäßig benetzte bzw. bedeckte Oberfläche der Druckform durch Trocknung des Feuchtmittels oder Härtung, insbesondere Eintrocknen, des farbannehmenden/feuchtmittelabweisenden Materials gezielt mit dem Druckbild versehen wird, in dem die getrockneten Stellen oder die Stellen mit dem erhärteten Material die farbannehmenden Stellen bilden. Eine Auftragseinrichtung, mit der ein farbannehmendes und feuchtmittelabweisendes Material unmittelbar bildgemäß aufgetragen wird, ist zur Durchführung des Verfahrens nicht erforderlich. Indem zur Erzeugung des Druckbilds in beiden Verfahrensalternativen nur ein gleichmäßiger Materialauftrag vorgenommen wird, werden die Kosten für die Auftragseinrichtung zur Bebilderung deutlich reduziert.

Unter einem gleichmäßigen Auftrag im Sinne der Erfindung wird jeglicher Materialauftrag zur Bebilderung verstanden, der nicht selbst bereits bildgemäß erfolgt. Bevorzugt erfolgt der Materialauftrag über die gesamte Oberfläche der Druckform oder zumindest in Oberflächenstreifen gleichmäßig.

Das farbannehmende/feuchtmittelabweisende Material ist vorzugsweise Druckfarbe, besonders bevorzugt Druckfarbe der laufenden Produktion, in der die bebilderte Druckform dann verwendet wird.

Ein besonderer Vorteil des Verfahrens in beiden Alternativen ist, dass zum Auftrag des farbannehmenden und vorzugsweise feuchtmittelabweisenden Materials im Zuge der Bebilderung eine für die laufende Produktion sowieso vorhandene Farbauftragseinrichtung, beispielsweise eine Farbauftragswalze, verwendet werden kann. Die Verwendung solch einer Farbauftragseinrichtung, insbesondere eine Farbwalze, entspricht auch einem besonders bevorzugten Ausführungsbeispiel der Erfindung. Es könnte jedoch auch eine gesonderte Auftragswalze oder eine andere geeignete Auftragseinrichtung, beispielsweise eine Sprüheinrichtung, nur zur Bebilderung oder zur Bebilderung und für den nachfolgenden Farbauftrag vorgesehen sein. Immerhin müsste auch in solch einer Ausbildung der Materialauftrag nicht bildgemäß gesteuert erfolgen.

Bildgemäß ist in jedem Falle nur die Trocknung des Feuchtmittels und/oder die Härtung des farbannehmenden/vorzugsweise feuchtmittelabweisenden Materials.

Die bildgemäße, immaterielle Behandlung eines zuvor gleichmäßig auf die farbübertragende Oberfläche der Druckform aufgebrachten Materials bzw. Feuchtmittels erlaubt auch eine präzisere Bilderzeugung als dies durch einen unmittelbaren bildgemäßen Materialauftrag möglich ist.

Ferner betrifft die Erfindung eine Vorrichtung zur Bebilderung einer Druckform in einer Rotationsdruckmaschine für den Nassoffsetdruck. Bei der Maschine handelt es sich vorzugsweise um eine Rollendruckmaschine für den Zeitungsoffset. Die Vorrichtung umfasst einen Druckformzylinder mit der Druckform, eine Feuchteinrichtung zur Benetzung einer farbübertragenden Oberfläche der Druckform mit Feuchtmittel und eine erfindungsgemäße Auftrags- und Bildübertragungseinrichtung, mit der an der farbübertragenden Oberfläche durch Aufbringung eines Druckfarbe annehmenden und Feuchtmittel abweisenden Materials ein Druckbild mit farbannehmenden Stellen und feuchtmittelannehmenden Stellen erzeugt wird.

Die Auftrags- und Bildübertragungseinrichtung weist ein Auftragsmittel zum gleichmäßigen Auftrag eines fließfähigen Materials, das Druckfarbe annimmt und Feuchtmittel vorzugsweise abweist, und die erfindungsgemäße Belichtungsvorrichtung auf. Das Druckbild wird durch eine Kombination aus Materialauftrag mittels des Auftragsmittels und Belichtung derjenigen Stellen der farbübertragenden Oberfläche mittels der Belichtungsvorrichtung erzeugt, die farbannehmend auszubilden sind. Vorzugsweise handelt es sich bei dem Auftragsmittel um ein Auftragsmittel, das in der laufenden Produktion die Druckfarbe auf den Druckformzylinder überträgt.

In einer großen Rotationsdruckmaschine mit einer Mehrzahl von Druckformzylindern ist vorzugsweise jedem dieser Druckformzylinder solch eine Auftrags- und Bildübertragungseinrichtung zugeordnet. Mit zunehmender Maschinengröße, d.h. Anzahl der Druckformzylinder, wachsen mit der erfindungsgemäßen Direktbebilderung die Kostenvorteile vor allem dann, wenn die Druckproduktionen oft wechseln und Ausfallzeiten minimiert werden sollen.

Schließlich betrifft die Erfindung auch eine feuchtmitteldurchlässige Druckform und ein Verfahren zur Herstellung solch einer Druckform. Es handelt sich hierbei um eine Druckform für eine Nassoffset-Rotationsdruckmaschine. Die Druckform weist eine bebilderbare oder bebilderte Oberfläche zur Übertragung von Druckfarbe auf.

Zumindest an einer farbübertragenden Oberfläche ist die unbebilderte Druckform feuchtmittelfreundlich bzw. -annehmend, vorzugsweise hydrophil. Die Druckform kann, wie bekannte Druckformen auch, beispielsweise eine Druckformplatte oder vorzugsweise eine Druckformschale sein, die auf einem Trägerzylinder befestigt wird, beispielsweise mittels einer bekannten Spannvorrichtung. Solche eigenstabilen, bebilderbaren oder bebilderten Druckformen sind als solche ebenfalls Gegenstand der Erfindung. Der Trägerzylinder bildet in diesem Fall zusammen mit der befestigten Druckform den Druckformzylinder. Grundsätzlich kann die Druckform auch eine Zylinderhülse sein. Nachteil solch einer Druckformhülse wäre allerdings, dass der Trägerzylinder nur einseitig drehgelagert werden könnte, um die Druckformhülse auf einfache Weise wechseln zu können. Ebenso sind Druckformzylinder Gegenstand der Erfindung, die eine bebilderbare oder bereits bebilderte Druckform an einer Zylindermantelfläche aufweisen, wobei die Druckform nicht entfernt werden kann; zumindest kann die Druckform in dieser Ausbildung nicht zerstörungsfrei entfernt werden.

Die Druckform ist in einer radialen Richtung durchlässig für ein Feuchtmittel. Im Falle einer Druckplatte, die auf einem Trägerzylinder befestigt wird, ist die Richtungsangabe auf den montierten Zustand bezogen. Der Druckformzylinder einschließlich Druckform weist eine Einrichtung auf, mittels der das Feuchtmittel zur Druckform führbar ist. Als Trägerzylinder wird im Sinne der Erfindung derjenige Zylinderkörper der Druckformzylinders verstanden, auf dem die Druckform angebracht ist, entweder als eigenständige Druckplatte oder, wie vorstehend bereits ausgeführt, als fester Bestandteil. In beiden Ausführungsformen wird das Feuchtmittel, insbesondere Feuchtwasser, von der Rückseite der Druckform an die farbübertragende Oberfläche der Druckform gebracht. Da aufgrund der radialen Durchlässigkeit der Druckform an der farbübertragenden Oberfläche Durchlasskanäle für das Feuchtmittel münden, kann die Feuchtung der Druckform, d.h. der farbübertragenden Oberfläche, und damit die Farbannahme oder -abweisung durch ein gezieltes Schließen von Durchlasskanälen an der farbübertragenden Oberfläche bewirkt werden. Im Bereich von geschlossenen Durchgangskanälen kann kein Feuchtmittel an die farbübertragende Oberfläche gelangen, so dass in dem den Durchgangskanal einschließendenden Bereich Farbe angenommen wird.

Obgleich die farbübertragende Oberfläche grundsätzlich durch Perforation einer zunächst geschlossenen Oberfläche hergestellt werden kann, weist die Druckform vorzugsweise als Druckschicht eine äußere Materialschicht auf, die porös ist.

Die Druckform ist nach der Erfindung schichtweise aufgebaut und weist eine äußere Druckschicht mit der bebilderbaren oder bebilderten Oberfläche und eine angrenzend darunterliegende Unterschicht auf. Vorzugsweise nimmt die Durchströmbarkeit der Druckform an einer Grenzfläche von der Unterschicht in die Druckschicht abrupt um ein Mehrfaches ab. Entsprechend nimmt der Strömungswiderstand zu. Vorteilhafterweise können diese beiden Schichten aus unterschiedlichen Materialien bestehen und auch dadurch optimal erfindungsgemäß unterschiedlichen Funktionen angepasst sein.

Unter Durchströmbarkeit wird im Sinne der Erfindung das Volumen des verwendeten Feuchtmittels verstanden, das durch eine Schicht mit einer ausgeführten Dicke bezogen auf einen über diese Schicht wirkenden Differenzdruck pro Zeit und Fläche hindurchströmt, wobei als Fläche die äußere Oberfläche der Schicht genommen wird. Die Durchströmbarkeit wird als Materialkennwert im Folgenden auf den unbebilderten Zustand der farbübertragenden Oberfläche bezogen.

Unter einer abrupten Abnahme im Sinne der Erfindung wird nicht nur eine plötzliche, für die praktischen Belange als unstetig anzusehende Änderung der Durchströmbarkeit verstanden, sondern auch eine stetige Änderung. Im letzteren Falle weist die Durchströmbarkeit beim Übergang von der Unterschicht in die Druckschicht einen steilen Gradienten auf. Eine in der Praxis nie gänzlich zu vermeidende Übergangszone von der Unterschicht in die Druckschicht, in der die erfindungsgemäße Änderung der Durchströmbarkeit stattfindet, ist jedenfalls dünner als die Druckschicht. Es wird erfindungsgemäß eine möglichst steile Abnahme der Durchströmbarkeit von der Unterschicht in die Druckschicht angestrebt.

Nach einem Verfahren zur Herstellung solch eines Zylinders wird zuerst die Unterschicht gebildet, vorzugsweise durch ein Vlies aus nichtrostenden Metallfasern. Solch ein Vlies weist vorteilhafterweise eine im Vergleich zu Materialien gleicher Porosität hohe Zug- und Druckfestigkeit auf. Gesinterte und auf eine definierte Dicke gewalzte Vliese aus nichtrostenden Metallfasern sind besonders geeignet. Geeignete Vliese sind aus der Filtertechnik bekannt.

Die Druckschicht wird durch Beschichtung der Unterschicht, vorzugsweise mittels Plasmaspritzen, erhalten. Sie wird bevorzugt als Keramikschicht gebildet.

Die Unterschicht weist sowohl in radialer Richtung als auch in Axial- und in Umfangrichtung eine um ein Mehrfaches größere Durchströmbarkeit als die unmittelbar angrenzende Druckschicht auf. Vorzugsweise ist ihre Durchströmbarkeit um das wenigstens Hundertfache, besonders bevorzugt um wenigstens das Tausendfache größer als die der Druckschicht. Die Unterschicht ist an ihren freien Rändern vorzugsweise gegen Feuchtmitteldurchtritt abgedichtet. Vorzugsweise ist die gesamte Druckform an ihren freien Rändern abgedichtet.

Durch den erfindungsgemäß schichtweisen Aufbau der Druckform wird der Strömungswiderstand bzw. die Durchströmbarkeit der Druckform insgesamt in praktischer Näherung ausschließlich durch die Druckschicht bestimmt. Die Druckschicht weist vorzugsweise ein einheitliches Materialgefüge auf und kann nicht zuletzt daher der geforderten Druckfeinheit optimal angepasst hergestellt werden. Ihre Struktur bzw. ihr Gefüge ist derart, dass sie von Kapillarporen durchzogen wird, die sehr fein sind und an der farbübertragenden Oberfläche eine hohe Flächendichte aufweisen. Pro Bildpixel mündet an der Oberfläche wenigstens eine solche Kapillarpore. Gleichzeitig wird die Porosität der Druckschicht gering gehalten. Vorzugsweise liegt sie unter 20%. Es handelt sich um eine offene Porosität.

Die Druckform hat den weiteren Vorteil, dass mittels einer einzigen dünnen, in sich gleichmäßigen Schicht, der Druckschicht, ein besonders gut definierter Druckabfall durch diese Schicht hindurch einstellbar ist. Die darunterliegende Unterschicht hat in Bezug auf die Feuchtmittelführung die Aufgabe, das Feuchtmittel gleichmäßig unterhalb der Druckschicht über die Fläche zu verteilen. In ihr bildet sich der den Überdruck an der Rückseite der äußeren Druckschicht mitbestimmende Feuchtmittelpegel. Durch die erfmdungsgemäße Ausbildung bildet sich an der Rückseite der äußeren Druckschicht eine Art Feuchtmittelsee. Das Feuchtmittel drückt so besonders gleichmäßig gegen die Druckschicht, so dass sich insgesamt definierte Druckverhältnisse einstellen und damit eine präzise Feuchtmittelführung möglich ist. Ferner findet in Beschleunigungs- und Verzögerungsphasen des Druckformzylinders, beispielsweise beim Hoch- oder Herunterfahren der Maschine, praktisch eine verzugslose Anpassung des Feuchtmitteldrucks an die jeweils benötigten Feuchtmittelzufuhrraten zur Oberfläche statt.

Die Druckform wird besonders bevorzugt in Kombination mit dem erfmdungsgemäßen Verfahren der Bebilderung und/oder in einer erfindungsgemäßen Vorrichtung verwendet. Sie ist hierauf jedoch nicht beschränkt, sondern auch in Kombination mit herkömmlichen Verfahren und Vorrichtungen der Bebilderung von innengefeuchteten Druckformen gewinnbringend verwendbar.

Bevorzugterweise haben die Durchlasskanäle der Druckschicht, die vorzugsweise die vorgenannten Kapillarporen sind, einen mittleren Durchmesser von 0.1 bis 5 µm, insbesondere gemessen an den Mündungsstellen an der farbübertragenden Oberfläche. Die poröse Druckschicht weist an der farbübertragenden Oberfläche vorzugsweise eine Mittenrauhigkeit Ra im Bereich von 0.2 bis 5 µm und vorzugsweise eine gemittelte Rauhtiefe Rz im Bereich von 0.2 bis 10 µm auf.

Die Unterschicht wird von Durchgangskanälen, beispielsweise verbundene Poren, durchzogen, die einen Durchmesser von 10 µm bis 2 mm, vorzugsweise 10-50 µm, haben. Als Durchmesser wird der Durchmesser eines Kreises verstanden, der die mittlere Querschnittsfläche der Durchlasskanäle der jeweiligen Schicht besitzt. Wird sie durch ein Vlies gebildet, ist zur Charakterisierung der Laminardurchmesser, bestimmt nach ASTMFF 902, die geeignete Größe. Der Laminardurchmesser sollte dann zwischen 10 und 100 µm betragen.

Die Dicke der Druckschicht in radialer Richtung liegt vorzugsweise zwischen 50 und 500 µm, und die Dicke der Unterschicht liegt vorzugsweise zwischen 500 µm und 3 mm.

Die Druckschicht weist vorzugsweise einen hohen Absorptionskoeffizienten für Infrarotstrahlung auf. Der Absorptionskoeffizient sollte zumindest 0.9 betragen.

Da in der ersten Verfahrensalternative das Feuchtmittel durch Infrarot- bestrahlung verdampft wird und es im nahen Infrarot bei Verwendung von Feuchtwasser als Feuchtmittel nur zu einer geringen Absorption von infraroter Laserstrahlung im Feuchtmittelfilm kommt, findet eine Erwärmung und Verdampfung eines Feuchtmittels indirekt über die Erwärmung der Druckschicht statt. Um eine starke lokale Erwärmung der Druckschicht zu erreichen, wird als Material für die Druckschicht vorzugsweise ein Material mit einer Wärmekapazität gewählt, die geringer ist als die Wärmekapazität des Feuchtmittels. Besonders bevorzugt ist die Wärmekapazität der Druckschicht geringer als 1 J/g. Ferner wird die Druckschicht so ausgebildet, dass die Wärmeleitfähigkeit dieser Schicht deutlich geringer als die Wärmeleitfähigkeit des Feuchtmittels ist. Vorzugsweise ist die Wärmeleitfähigkeit geringer als 0.2 W/(m*K).

Bevorzugte Materialien für die Druckschicht sind dunkle, keramische Materialien, z. B. eine Al₂O₃-TiO₂ Mischung.

Eine eigenständige Druckform ist vorzugsweise zumindest dreischichtig aufgebaut mit einem Druckformträger, der Feuchtmittel durchleitet, der darauf aufgebrachten Unterschicht und der auf der Unterschicht aufgebrachten Druckschicht. Der Druckformträger ist vorzugsweise aus metallischem Material hergestellt. Er kann als verwölbbare ebene Platte oder als vorgeformte Schale, insbesondere als starre zylindrische Halbschale, ausgebildet sein. Solch einen mehrschichtigen Aufbau kann auch eine am Trägerzylinder fest angebrachte Druckform aufweisen.

Ein perforierter Druckformträger weist Löcher mit einem Durchmesser vorzugsweise im Bereich von 0,5 bis 5 mm oder flächengleiche Ausnehmungen auf, die im gesamten Bereich der Druckform voneinander einen Abstand vorzugsweise im Bereich von 5 bis 50 mm haben. Die Lochdichte kann jedoch erheblich verringert werden, indem die Flächen pro Loch vergrößert und/oder an der äußeren Oberfläche des Druckformträgers eine Kanalstruktur ausgebildet wird.

Die Unterschicht wird auf den Druckformträger aufgebracht, insbesondere als Ganzes darauf befestigt, vorzugsweise mittels eines temperaturbeständigen Klebstoffs geklebt oder gebondet.

Vorzugsweise ergeben sich die trockenen Stellen an der farbübertragenden Oberfläche einer feuchtmitteldurchlässigen Druckform durch gezielten Verschluss der an der farbübertragenden Oberfläche mündenden Durchlasskanäle.

Eine bevorzugte Möglichkeit des Verschließens wird durch wärmeinduziertes, vorzugsweise laserinduziertes, bildabhängiges Tonen bewirkt. Der Nassoffsetdruck beruht bekanntermaßen auf der Abstoßung von Farbe durch Feuchtmittel an den befeuchteten Stellen der Druckform. Wird nicht genügend Feuchtmittel geführt, kommt es zur Annahme von Farbe auch an den Nichtbildstellen. Dieser Vorgang wird im allgemeinen als Tonen bezeichnet.

In dieser ersten Verfahrensalternative wird die farbübertragende Oberfläche der Druckform von innen gefeuchtet und dann mittels der Belichtungsvorrichtung, vorzugsweise mittels Infrarotlaser, bildabhängig getrocknet. Es werden hierbei die Bildstellen getrocknet und unmittelbar anschließend eingefärbt. Bei dem Einfärben wird Farbe auf die getrockneten Bereiche übertragen, während die feuchten Bereiche farbfrei bleiben. In den getrockneten Bereichen verstopft die Farbe die Durchlasskanäle, so dass in diesen Bereichen kein Feuchtmittel zur farbübertragenden Oberfläche mehr vordringt.

In der zweiten Verfahrensalternative wird die Druckform mittels der Belichtungsvorrichtung nach dem Einfärben bildabhängig erwärmt. Die Farbe trocknet in den erwärmten Bereichen und damit auch in den Durchlasskanälen bzw. an den Mündungen der Durchgangskanäle ein. Die in den Durchlasskanälen eingetrocknete Farbe kann bei anschließender Feuchtmittelzufuhr nicht mehr verdrängt werden, während die fließfähige Farbe durch das Feuchtmittel verdrängt wird. Bis zum Freilaufen der Druckform kann der Feucht mitteldruck gegenüber dem Feuchtmitteldruck in der Produktion leicht erhöht sein.

Die Bebilderung der Druckform, d.h. die in den Durchlasskanälen eingetrocknete Farbe, kann durch eine konventionelle Druckform-Wascheinrichtung entfernt werden und/oder durch die Innenfeuchtung mit einem gegenüber der Produktion erhöhten Feuchtmitteldruck.

Alternativ zu dem vorgenannten Verschließen mittels Farbe kann in einer Untervariante der zweiten Verfahrensalternative auch ein Monomer oder Gemisch von Monomeren auf die farbübertragende Oberfläche der Druckform aufgetragen werden, insbesondere aufgesprüht werden. Mittels der Belichtungsvorrichtung wird eine Polymerisation ausgelöst. Der dabei gebildete Kunststoff verschließt die Durchlasskanäle, z.B. durch Bildung von Polystyrol aus Styrol unter Wärmeeinwirkung. Die verschlossenen Poren können durch erneutes Erwärmen wieder frei gemacht werden, indem das Polymer wieder zerfällt und durch Zuführung von Feuchtmittel abgeführt wird. Das Feuchtmittel wird bei dem Löschen des Bilds vorzugsweise von innen zugeführt. Ein Waschen von außen ist jedoch ebenfalls möglich, insbesondere unterstützend.

Die an der farbübertragenden Oberfläche pro Zeiteinheit austretende Feuchtmittelmenge wird durch Einstellung des Feuchtmitteldrucks geregelt, vorteilhafterweise durch die Einstellung der Feuchtmittelmenge im Druckformzylinder. Durch Erhöhung der Feuchtmittelmenge an der Rückseite der Druckform wird aufgrund der Zentrifugalkräfte der Feuchtmitteldruck erhöht. Ferner wird die Feuchtmittelzufuhrrate zum Druckformzylinder proportional zur Druckgeschwindigkeit erhöht und erniedrigt.

Die pro Zeiteinheit an der farbübertragenden Oberfläche austretende Feuchtmittelmenge, d.h. die Durchströmungsrate der Druckform, hängt in einer für die Praxis völlig ausreichenden Näherung nur von der Durchströmbarkeit der äußeren Druckschicht ab. Die Druckdifferenz über die äußere Druckschicht wächst bei konstanter Rotationsgeschwindigkeit etwa linear mit dem Feuchtmittelpegel, der sich an der Rückseite der Druckschicht einstellt. Die Durchströmbarkeit der Druckschicht lässt sich allein durch die Dicke der Druckschicht einstellen, da die Druckschicht überall eine im wesentlichen konstante Porosität und Kapillarporendichte aufweist. In diesem Sinne homogen ist auch die Unterschicht. Durch die erfmdungsgemäße Zweiteilung der Funktion der gleichmäßigen Verteilung des Feuchtmittels und der Einstellung der Durchströmbarkeit der Druckform kann eine besonders genaue Dosierung der an der farbübertragenden Oberfläche austretenden Feuchtmittelmenge vorgenommen werden. Die Dicke des Feuchtmittelfilms auf der Oberfläche kann genau, insbesondere sehr klein, eingestellt werden. Bei konstanter Zylindergeschwindigkeit wird genau soviel Feuchtmittel an die Rückseite der Druckform geführt, wie an der farbübertragenden Oberfläche austreten soll. Die Gleichgewichtshöhe des Feuchtmittelpegels in der Unterschicht an der Rückseite der Druckschicht stellt sich dann in Abhängigkeit von der Drehzahl des Druckformzylinders von alleine ein. Die Einstellung bei einem Drehzahlwechsel erfolgt ebenfalls wegen des erfindungsgemäßen Aufbaus der Druckform nahezu verzögerungsfrei.

Der Überdruck an der Rückseite der Druckschicht sollte 100 mbar nicht überschreiten. Der Feuchtmittelpegel an der Rückseite der Druckschicht sollte zumindest im Gleichgewicht von Zu- und Abfluss die Dicke der Unterschicht nicht überschreiten. Entsprechend werden die Dicke der Unterschicht und die Durchströmbarkeit der Druckschicht bevorzugt aufeinander abgestimmt.

Bevorzugte Ausführungsbeispiele werden nachfolgend anhand von Zeichnungen erläutert. Es zeigen:
- Fig. 1: eine Zylinder- und Walzenanordnung mit einem Druckformzylinder nach einem ersten Ausführungsbeispiel,
- Fig. 2: eine Zylinder- und Walzenanordnung mit einem Druckformzylinder nach einem zweiten Ausführungsbeispiel,
- Fig. 3: den Druckformzylinder nach Fig. 2,
- Fig. 4: die Druckform des Druckformzylinders nach Fig. 3,
- Fig. 5: eine Belichtungsvorrichtung einer Bildübertragungseinrichtung in einem ersten Schnitt,
- Fig. 6: die Belichtungsvorrichtung in einem zweiten Schnitt,
- Fig. 7: eine Belichtungsvorrichtung einer weiteren Bildübertragungseinrichtung und
- Fig. 8: eine Software-Justierung der Bildübertragungseinrichtungen der Fig. 5 bis 7.

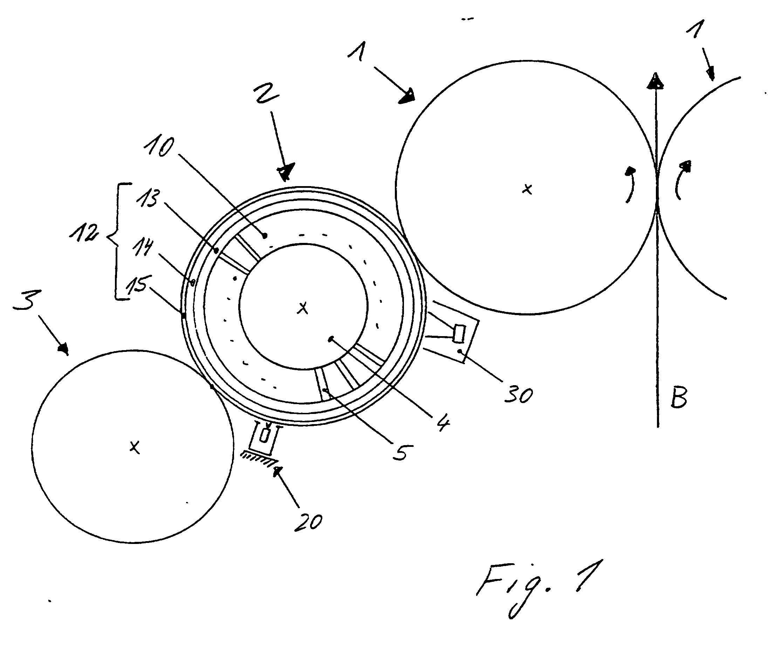

In Fig. 1 wird eine Bedruckstoffbahn B zwischen zwei Gummituchzylindern 1 hindurchgeführt und in dem zwischen den beiden Gummituchzylindern 1 gebildeten Druckspalt beidseitig bedruckt. Den beiden Gummituchzylindern 1 ist je ein Druckformzylinder 2 in der für den linken Gummituchzylinder 1 dargestellten Art und Weise zugeordnet. Ebenso ist eine Farbwalze 3 für den linken Gummituchzylinder 1 dargestellt. Die Anordnung von Zylindern und Walzen ist beidseits der Bahn B spiegelsymmetrisch. Vorzugsweise wiederholt sich die in Fig. 1 dargestellte Anordnung für jeden der vielen Gummituchzylinder der Druckmaschine.

Im Ausführungsbeispiel handelt es sich um eine Zeitungsoffset-Rollenrotationsdruckmaschine mit Gummi-Gummi-Produktion, beispielsweise eine WIFAG OF 370. Ebenso kann es sich bei der Maschine jedoch auch um eine Maschine für eine Gummi-Stahl-Produktion handeln, beispielsweise mit einem oder zwei zentralen Stahlzylindern und damit Druckspalte bildenden Gummituchzylindern pro Druckeinheit, beispielsweise eine WIFAG OF 470 oder OF 790.

Die Farbe wird von der Farbwalze 3 auf den Druckformzylinder 2 und von dem Druckformzylinder 2 auf den Gummituchzylinder 1 übertragen, der im Druckspalt die Bahn B mit dem vom Druckformzylinder 2 erhaltenen Bild bedruckt.

Der Druckformzylinder 2 weist einen hohlzylindrischen Trägerzylinder 10 mit einem zentralen, axialen Hohlraum 4 auf, der in Fluidverbindung zu einer Feuchtmittelzufuhreinrichtung steht. Die Fluidverbindung wird durch eine Drehverbindung an einem oder beiden Wellenzapfen des Druckformzylinders 2 gebildet. Die Feuchtmittelzufuhr erfolgt durch diesen Wellenzapfen hindurch in den Hohlraum 4. Das Feuchtmittel wird zuvor gefiltert, um störende Ablagerungen innerhalb einer Druckform 12 zu vermeiden. Der Trägerzylinder 10 weist Durchgangskanäle 5 in radialer Richtung auf. Die Durchgangskanäle 5 sind als gerade, exakt radiale Bohrungen 5 ausgeführt. Im Ausführungsbeispiel weist jede der Bohrungen 5 einen Durchmesser von 6 mm auf. Die Bohrungen 5 münden an einem Außenmantel des Trägerzylinders 10 in einem Abstand von 20 mm voneinander, gemessen zwischen den Zentren der Bohrungen.

Der Außenmantel des Trägerzylinders 10 wird von schalenartig übereinandergeschichteten, perforierten Stahlblechen umgeben. Die Stahlbleche bilden einen perforierten Druckformträger 13 der mit dem Trägerzylinder 10 ständig verbundenen Druckform 12. Im Ausführungsbeispiel sind vier perforierte Stahlbleche zu solch einem Druckformträger 13 übereinandergeschichtet. Die Unterschicht 14 könnte aber auch unmittelbar am Trägerzylinder befestigt sein.

Zur Bildung der Druckform 12 ist auf den Druckformträger 13 eine Unterschicht 14 gebondet, die ihrerseits als Träger für eine Druckschicht 15 dient. Die Druckschicht 15 bildet an ihrer freien äußeren Oberfläche die farbübertragende Oberfläche des Druckformzylinders 2. Die Druckschicht 15 und die Unterschicht 14 sind porös.

In den Hohlraum 4 des Druckformzylinders 2 wird Feuchtmittel eingespritzt. Aufgrund der Fliehkraft wird das Feuchtmittel durch die Bohrungen 5 des Trägerzylinders 10 und den als Verteiler wirkenden, perforierten Druckformträger 13 an die Rückseite der Unterschicht 14 geführt. Durch die Unterschicht 14 und die Druckschicht 15 gelangt das Feuchtmittel an die farbübertragende Oberfläche und bewirkt, dass an den benetzten Stellen keine Druckfarbe angenommen wird.

Als Feuchtmittel wird Wasser verwendet, das mit den im Offsetdruck üblichen Zusätzen versehen ist.

Dem Druckformzylinder 2 ist eine Bildübertragungseinrichtung mit einer Belichtungsvorrichtung 20 zugeordnet. Die Belichtungsvorrichtung 20 umfasst Infrarot-Laserdioden, die auf die Oberfläche des Druckformzylinders 2 gerichtet sind. Die Bildübertragungseinrichtung ist so angeordnet, dass der Druckformzylinder 2 bei seiner Rotation kurz wie möglich vor Erreichen der Kontaktstelle mit der Farbwalze 3 die Bildübertragungseinrichtung überstreicht.

Ferner ist dem Druckformzylinder 2 eine Wascheinrichtung 30 zugeordnet, die im Ausführungsbeispiel in Rotationsrichtung gesehen hinter dem Gummituchzylinder 1 und vor der Belichtungsvorrichtung 20 angeordnet ist. Mittels der Wascheinrichtung 30 kann Farbe von der Oberfläche des Druckformzylinders 2 abgewaschen werden.

Fig. 2 zeigt den Druckformzylinder 2 im Querschnitt mit zwei Druckformen 12, die eigenständig ausgebildet und mit einem Trägerzylinder 10 des Druckformzylinders 2 mittels einer herkömmlichen Spannvorrichtung 6 lösbar befestigt sind.

Der Trägerzylinder 10 entspricht im wesentlichen dem Trägerzylinder 10 des ersten Ausführungsbeispiels. Allerdings ist der zentrale axiale Zuführkanal bzw. Hohlraum 4 mit einem wesentlich geringeren Durchmesser ausgestattet. Dementsprechend sind die radial abzweigenden Kanäle 5 länger als diejenigen des ersten Ausführungsbeispiels. Die radialen Verteilerkanäle 5 münden in axiale Verteilerkanäle, die an der äußeren Mantelfläche des Trägerzylinders 10 ausgenommen sind, um die Verteilung des Feuchtmittels möglichst früh zu vergleichmäßigen.

Die Anordnung des Druckformzylinders 2 der Fig. 2 in einer Druckmaschine entspricht derjenigen des ersten Ausführungsbeispiels, so dass in Bezug auf die Bebilderung und alle weiteren Details und Merkmale der Erfindung stets auf beide Ausführungsbeispiele verwiesen wird.

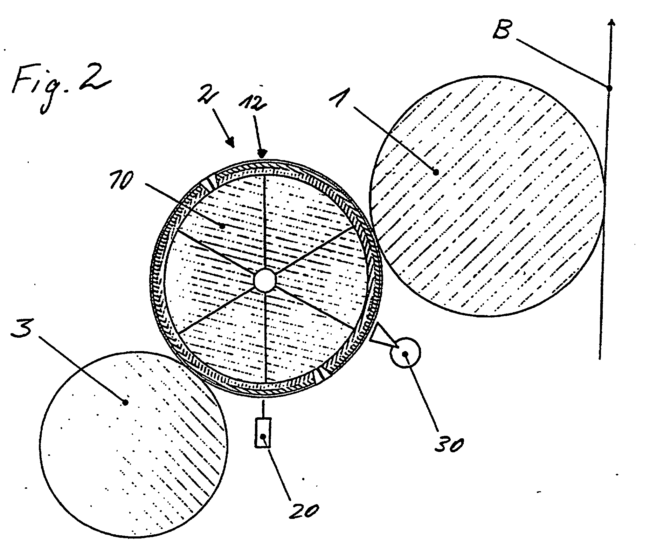

Eine der beiden Druckformen 12 des zweiten Ausführungsbeispiels ist in Figur 3 einzeln dargestellt. Die Druckform 12 wird in der bereits zum ersten Ausführungsbeispiel beschriebenen Art durch einen perforierten Druckformträger 13, eine darauf aufgebrachte poröse Unterschicht 14 und eine darüber geschichtete, poröse Druckschicht 15 gebildet. Der Druckformträger 13 wird durch eine einzige halbzylindrische Stahlplatte mit gleichmäßiger Perforierung gebildet.

Die poröse Unterschicht 14 wird durch ein Stahlfaservlies gebildet, dessen Fasern zu sogenannten Wirrfasern vervliest sind. Nach dem Vervliesen ist das Vlies im Verbund mit einem Drahtgewebe im Vakuum gesintert und auf eine definierte Dicke, nämlich die Schichtdicke in der Druckform 12, gewalzt worden. Aufgrund der sehr hohen Porosität des Stahlfaservlieses von vorzugsweise mehr als 60%, ergibt sich im Vergleich zum Materialanteil eine extrem große Summe von Porenquerschnitten. Im Vergleich zum Teilchengrößenspektrum von Pulvern, ist der Durchmesserbereich der Fasern sehr einheitlich, so dass auch die Porengrößenverteilung sehr eng ist. Auf diese Weise ergeben sich die gewünschten Eigenschaften der hohen Durchströmbarkeit und des geringen Druckabfalls durch die Unterschicht 14. Ferner ist das Vlies porenformstabil durch den Sinterprozess.

Das Stahlfaservlies ist mittels eines temperaturbeständigen Klebstoffs auf den Druckformträger 13 gebondet. Mittels Plasmaspritzgießen, vorzugsweise im Vakuum, ist die Unterschicht 14 mit der Druckschicht 14 beschichtet worden. In den Ausführungsbeispielen ist die Druckschicht 14 eine keramische Schicht.

Bevorzugte Materialangaben und Kennwerte für erfindungsgemäße Druckformen, insbesondere für die Druckformen 12 der Ausführungsbeispiele, sind in den nachstehenden Tabellen zusammengestellt. Ein dreischichtiger Aufbau wird zwar bevorzugt, ein Aufbau mit mehr als drei Schichten und auch ein nur zweischichtiger Aufbau sind jedoch ebenfalls Gegenstand der Erfindung. Besonders bevorzugte Kennwerte bzw. Kennwertbereiche sind jeweils in den zweiten Spalten angegeben. Dabei muss die jeweilige Schicht nicht allen Angaben gleichzeitig entsprechen, obgleich dies bevorzugt ist.

**TABELLE 1:**

| Druckschicht 15 | | |
|---|---|---|
| Material | hydrophil z.B. TiO₂-Al₂O₃ Mischungen wie sie in der Plasmabeschichtung verwendet werden | |
| Dicke | 50 - 500 µm | 100 - 200 µm |
| Kapillarporendurchmesser | 0.1 - 5 µm | 0.1 - 3 µm |
| offene Porosität | 3 - 30% | < 20% |
| Rz | 0.2 - 10 µm | 1 - 5 µm |
| Ra | 0.2 - 5 µm | |
| Durchströmbarkeit | 2 - 20 l/(hm²mbar) | |

**TABELLE 2:**

| Unterschicht 14 | | |
|---|---|---|
| Material | Vlies aus nichtrostenden Metallfasern, mit Drahtgewebe gesintert und anschließend gewalzt | |
| Dicke | 0.5 - 3 mm | 0.5 - 2 mm |
| Laminardurchmesser | 10-100 µm | 10 - 60 µm |
| Porosität | 50 - 80% | > 60% |
| Durchströmbarkeit | 1,000 - 40,000 l/(hm²mbar) | |

**TABELLE 3:**

| Druckformträger 13 | | |
|---|---|---|
| Material | nicht rostender Stahl, einstückig oder geschichtete Stahlbleche | |
| Dicke | 1 - 5 mm | |
| Lochdurchmesser | 0.5 - 5 mmm | |
| Lochabstand | 2 - 50 mm | 5 - 50 mm |
| Durchströmbarkeit | ≥ 200 l/(hm² mbar) | 200 - 20,000 l/(hm²mbar) |

Die Feuchtmitteldurchströmbarkeit der Druckform 12, bezogen auf den unbebilderten Zustand, weist einen Wert auf, der in dem Bereich von 2-20 l/(hm²mbar) liegt. Sie entspricht in einer für die Praxis ausreichenden Näherung auch dem Wert der Durchströmbarkeit der Druckschicht 15.

Durch die hohe, isotrope Durchströmbarkeit der Unterschicht 14 wird die homogene Verteilung des Feuchtmittels in der Unterschicht 14 und somit an der Rückseite der Druckschicht 15 erreicht.

Die vorstehend und auch in den Tabellen angegebenen Werte und Wertebereiche für die Durchströmbarkeit sind auf Feuchtwasser als Feuchtmittel bezogen. Sie gelten jedoch für andere geeignete Feuchtmittel mit gleichen oder ähnlichen Strömungseigenschaften ebenso. Ferner sind die Werteangaben zu den Durchströmbarkeiten auf den unbebilderten Zustand der Druckform bezogen.

Um eine Durchströmung zu erreichen, muss das Feuchtmittel mit einem Druck zugeführt werden, der den Strömungswiderstand der einzelnen Schichten überwindet, insbesondere den Kapillardruck der feinporigen Druckschicht 15. Dieser Druck entsteht durch die Fliehkräfte, die bei der Rotation des Druckformzylinders 2 auf das Feuchtmittel wirken. Die Druckdifferenz wächst in etwa linear mit dem Wasserpegel, der sich an der Rückseite der Druckform, d.h. in guter praktischer Näherung an der Rückseite der Druckschicht 15 einstellt.

Da der Differenzdruck hauptsächlich an der Druckschicht 15 auftritt, weil der Strömungswiderstand hier am größten ist, kommt es zu einer Zugbelastung der Unterschicht 14. Aus Festigkeitsgründen sollte diese Belastung gering sein. Aus bekannten Zusammenhängen zwischen Fliehkraft, Zylinderradius, Zylinderumfang, Rotationsgeschwindigkeit und Oberflächengeschwindigkeit ist zu erkennen, dass die Zugbelastung der Unterschicht bei konstanter Oberflächengeschwindigkeit mit steigendem Radius kleiner wird. Daher ist die Erfindung besonders vorteilhaft, wenn Zylinder mit großem Radius verwendet werden, wie dies beispielsweise in Zeitungsdruckmaschinen mit doppeltem Umfang der Fall ist. Das Eigengewicht der Druckschicht 15 sollte ebenfalls nicht vernachlässigt werden. Verglichen mit dem in der Unterschicht 14 vorhandenen Feuchtmittelsee, der z.B. 1 mm tief ist, ist jedoch die Masse der Druckschicht 15 wegen ihrer geringeren Dicke, von beispielsweise 100 µm, klein. Aus den gleichen Überlegungen erkennt man, dass die Verwendung einer dicken Druckschicht weniger vorteilhaft wäre. Es müsste in solch einem Fall entweder sehr poröses Material bzw. ein Material mit großen Poren verwendet werden, was sich ungünstig auf die Festigkeit der Druckschicht und auch auf die Druckqualität auswirken würde. Oder es müsste ein hoher Überdruck an der Rückseite einer dicken Druckschicht erzeugt werden, was bei konstanter Zylindergeschwindigkeit Zylinder mit sehr kleinen Radien und damit einhergehende hohe Fliehkräfte voraussetzt oder eine Feuchtmittelzufuhr unter Druck, was jedoch Dichtungsprobleme bei der Einführung des Feuchtmittels in den rotierenden Zylinder hervorrufen würde.

Bei einem Pegel von 0.1 mm ergibt sich bei einer Rotationsgeschwindigkeit von 36.000 Umdrehungen/h und einem Zylinderradius von 200 mm durch die Fliehkräfte ein Feuchtmitteldruck von etwa 0.55 mbar an der Rückseite der Druckschicht 15. Der maximale Differenzdruck über die Druckform 12 sollte 100 mbar nicht übersteigen. Da bei verminderter Maschinengeschwindigkeit entsprechend weniger Feuchtmittel an der farbübertragenden Oberfläche vorhanden sein muss und sollte, kann der Druck bei Verminderung der Zylindergeschwindigkeit, insbesondere linear, mit der Geschwindigkeit abnehmen. Der Feuchtmittelpegel an der Rückseite der Druckschicht 15 darf die Dicke der darunterliegenden Schichten nicht übersteigen. Er sollte bei der beispielhaft dreischichtigen Druckform 12 höchstens so hoch wie die Dicke der Unterschicht 14 sein. Bei einem Feuchtmittelpegel von 3 mm ergibt sich für den angenommenen Zylinderradius von 200 mm bei einer Rotationsgeschwindigkeit von 5.000 Umdrehungen/h ein Differenzdruck von etwa 0.45 mbar an der Rückseite der Druckschicht 15. Dieser Überdruck, der durch die Druckschicht 15 abgebaut wird, sollte über der Druckdifferenz liegen, die für eine ausreichende Durchströmung der Druckschicht 15 erforderlich ist. Die Druckschicht 15 sollte dementsprechend eine Materialstruktur aufweisen, die zumindest bei dem sich aus der Dicke der Unterschicht 14 ergebenden maximalen Differenzdruck zur ausreichenden Versorgung der farbübertragenden Oberfläche mit Feuchtmittel ausreicht, so dass auch bei niedriger Rotationsgeschwindigkeit ein Drucken möglich ist.

In der nachstehenden Tabelle sind Rechenbeispiele zur Darstellung der Abhängigkeit des Feuchtmitteldrucks von der Zylindergeschwindigkeit und dem Feuchtmittelpegel an der Rückseite der Druckschicht 15 zusammengefasst:

| Rotationsgeschw. [U/h] | Feuchtmittelpegel [mm] | Hydrostat. Druck [mbar] |
|---|---|---|
| 36,000 | 1 | 5.53 |
| 36,000 | 0.5 | 2.76 |
| 36,000 | 0.1 | 0.55 |
| 20,000 | 1 | 1.71 |
| 20,000 | 0.5 | 0.85 |
| 20,000 | 0.1 | 0.17 |
| 5,000 | 2 | 0.21 |
| 5,000 | 1 | 0.11 |
| 5,000 | 0.5 | 0.05 |

- Berechnungsgrundlage:: Zylinderradius 200 mm, Porosität Unterschicht 70%, Feuchtwasser
Mit abnehmender Rotationsgeschwindigkeit wird der Einfluss der Schwerkraft größer und muss daher berücksichtigt werden. Die Fliehkraft erzeugt bei einem Feuchtmittelpegel von 2 mm für den angenommenen Zylinderradius von 200 mm bei einer Rotationsgeschwindigkeit von 5,000 U/h einen Differenzdruck von etwa 0.2 mbar an der Rückseite der Druckschicht 15. Damit überwiegt die Fliehkraft die Gravitationskraft noch um etwa 30%. Durch die Kapillarwirkung der kleinen Poren in der Druckschicht 15 kommt es vorteilhafterweise zu einem Ausgleich der Schwankungen des Feuchtmitteldrucks. Daher wird auch bei geringen Geschwindigkeiten eine gleichmäßige Benetzung der Außenseite der Druckschicht 15 erreicht. Der mittlere, auf die Rückseite der Druckschicht 15 wirkende hydrostatische Druck aufgrund der Gravitation beträgt 1 mbar pro 10 mm Feuchtmittelpegel*Porosität der Unterschicht 14. Bei einer Zylindergeschwindigkeit von etwa 4.500 U/h oder darunter wird an der Rückseite der Druckschicht 15 der Gravitationsdruck größer als der durch die Fliehkräfte erzeugte Druck. Das Feuchtmittel fließt daher nach unten und bewirkt einen Anstieg des Feuchtmittelpegels im untenliegenden Bereich der Unterschicht 14. Feuchtmittel wird dort in den Druckformträger 13 zurückgedrängt. Es steigt damit nicht nur der Gravitationsdruck, sondern auch die Fliehkraft im unteren Bereich des Druckformzylinders 2. Daher sollte auch bei geringen Geschwindigkeiten eine Feuchtung zumindest des unteren Zylinderbereichs möglich sein.

Aufgrund der vorstehend erläutenden Zusammenhänge wird die Bildübertragungseinrichtung 20 bevorzugterweise dem unteren Bereich des Druckformzylinders 2 zugewandt angeordnet. Hierdurch ist eine präzise Bebilderung der Druckform 12 bis in den unteren Drehzahlbereich des Zylinders hinein möglich. Eine Untergrenze für die Zylinderdrehzahl bei der Bebilderung liegt im Zeitungsoffset mit zwei Druckformen 12 pro Druckformzylinder 2 in etwa bei 3.000 U/h.

Betrachtet man die Fliehkräfte, die an der Druckform 12 auftreten, so wirkt die größte Kraft auf die Halterungen der Druckform 12, mit denen die Druckform 12 in der Spannvorrichtung 6 des Druckformzylinders 2 befestigt ist. Weiterhin wirkt eine Kraft auf die geklebte oder gebondete Verbindung zwischen der Unterschicht 14 und dem Druckformträger 13. Eine geringere Kraft wirkt auf die Verbindungsfläche zwischen der Druckschicht 15 und der Unterschicht 14. Bei einem Druckformzylinder 2 mit einem Radius von 200 mm, bei einer Rotationsgeschwindigkeit von 36,000 U/h und einer Druckform 12 mit einer Oberfläche von 400 mm * 600 mm ergibt sich pro Druckform 12:

| | Masse | Fliehkraft |
|---|---|---|
| Druckformträger 13: | | |
| 5 mm dicke Halbschale aus Stahl | 9.6 kg | 7.6 kN |
| Unterschicht 14: | | |
| 2 mm Vlies, 70% Porosität | 1.2 kg | 947 N |
| Feuchtmittelsee in der Unterschicht 14: | | |
| 1 mm tief | 170 g | 134 N |
| Druckschicht 15: | | |
| 100 µm dick, Keramik | 50 g | 40 N |

In diesem Berechnungsbeispiel ergibt sich eine Gesamtkraft von etwa 8.7 kN die von den Halterungen der Druckform 12 aufgenommen werden muss. Auf die geklebte oder gebondete Verbindung zwischen dem Druckformträger 13 und der Unterschicht 14 wirkt eine Kraft von 1,121 N. Diese entspricht einer Zugbelastung von 5 mN/mm². Die Fasern der Unterschicht 14 werden an der Verbindung zur Druckschicht 15 mit etwa 1 mN/mm² belastet. Diese entspricht einem Druck von 10 mbar. Größere Drücke entstehen mit zunehmender Tief des Feuchtmittelsees oder bei schnellerer Rotation.

In einer ersten Verfahrensalternative der Bebilderung verdampft die Belichtungsvorrichtung 20 das Feuchtmittel an der Oberfläche. Zur Bebilderung einer noch "jungfräulichen" Druckform wird das die Oberflächen benetzende Feuchtmittel entsprechend des auf den Gummituchzylinder 1 zu übertragenden Bilds mittels der Belichtungsvorrichtung 20 verdampft. Bevor eine Stelle, von der mittels der Belichtungsvorrichtung 20 gerade Oberflächenfeuchtmittel verdampft wurde, aufgrund von nachdrängendem Feuchtmittel erneut angefeuchtet ist, passiert die getrocknete Stelle die Farbauftragswalze 3 und nimmt Farbe an. Eine Pore, die in die gerade getrocknete Oberflächenstelle mündet, wird durch die in diesem Bereich angenommene Farbe geschlossen, so dass kein Feuchtmittel mehr an den nunmehr druckenden Mündungsbereich gelangt.

Die Belichtungsvorrichtung 20 kann, anstatt Feuchtmittel zu verdampfen, auch dazu verwendet werden, bereits mit der Farbauftragswalze 3 aufgetragene Farbe an der farbübertragenden Oberfläche des Druckformzylinders 2 bildgemäß gezielt zu trocknen, um die unter den getrockneten Farbstellen liegenden Poren der Druckschicht 15 auf diese Weise zu verschließen. In dieser Verfahrensalternative wird mittels der Farbauftragswalze 3 Farbe gleichmäßig auf die noch trockene Oberfläche des Druckformzylinders 2 aufgebracht. Die Feuchtmittelzufuhr zum Druckfomrzylinder 2 wird vorzugsweise erst aufgenommen, wenn die Farbe gleichmäßig aufgebracht worden ist. Nach dem gleichmäßigen Auftrag der Farbe wird die noch fließfähige Farbe an den Bildstellen der farbübertragenden Oberfläche mittels der Belichtungsvorrichtung 20 getrocknet. In den Bildstellen findet hierbei ein Porenverschluss durch eingetrocknete Farbe statt. Die Bildstellen der farbübertragenden Oberfläche laufen somit im Zuge der einsetzenden oder fortschreitenden Feuchtung von innen nicht frei. Mit fortschreitender Feuchtung läuft die Druckform 12 allerdings an den Nichtbildstellen frei.

In beiden Verfahrensalternativen - dem induzierten Tonen und dem Farbtrocknen - kann die gleiche, in den Figuren gezeigte Anordnung verwendet werden. In der zweiten Vefahrensalternative, der Trocknung der Druckfarbe, kann eine Anordnung der Bildübertragungseinrichtung hinter der Farbwalze ebenfalls vorteilhaft sein.

Durch Abwaschen der Farbschicht mittels der Wascheinrichtung 30 kann die Bebilderung in beiden Verfahrensalternativen gelöscht werden.

Mit der gleichen Bildübertragungseinrichtung ist es auch möglich, ein auf der farbübertragenden Oberfläche des Druckformzylinders 2 aufgesprühtes Monomer zu polymerisieren und dadurch die Poren an der farbübertragenden Oberfläche zu verschließen. Durch erneutes Erwärmen nach Beendigung einer Druckproduktion mittels der gleichen Belichtungsvorrichtung 20 und Abführen des durch die Erwärmung zerfallenen Polymers mit dem Feuchtmittel kann die Bebilderung wieder gelöscht werden. Das Monomer kann auf der farbübertragenden Oberfläche der Druckform bereits aufgetragen sein. Vorzugsweise ist jedoch am Einbauort des Druckformzylinders 2 eine Auftragseinrichtung, insbesondere Sprühvorrichtung zum Aufsprühen des Monomers, vor Ort angeordnet, womit insbesondere auch in dieser Variante zur zweiten Verfahrensalternative wiederholt bebildert werden kann, ohne die Druckform 12 oder den Druckformzylinder 2 ausbauen zu müssen.

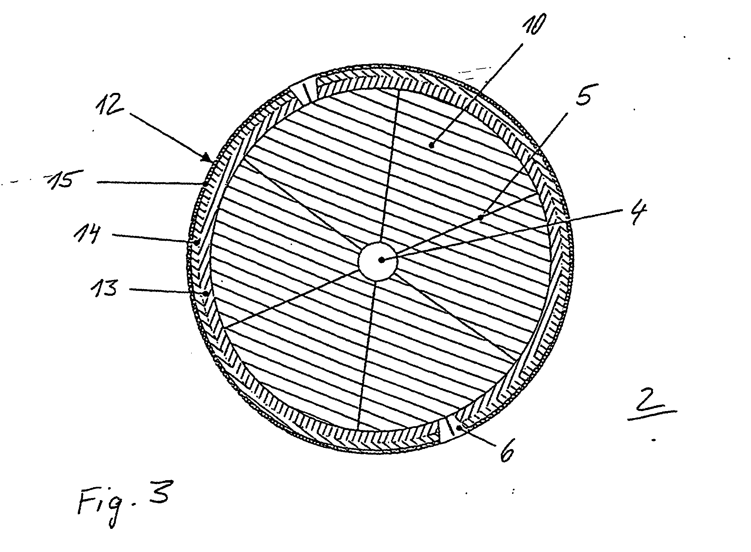

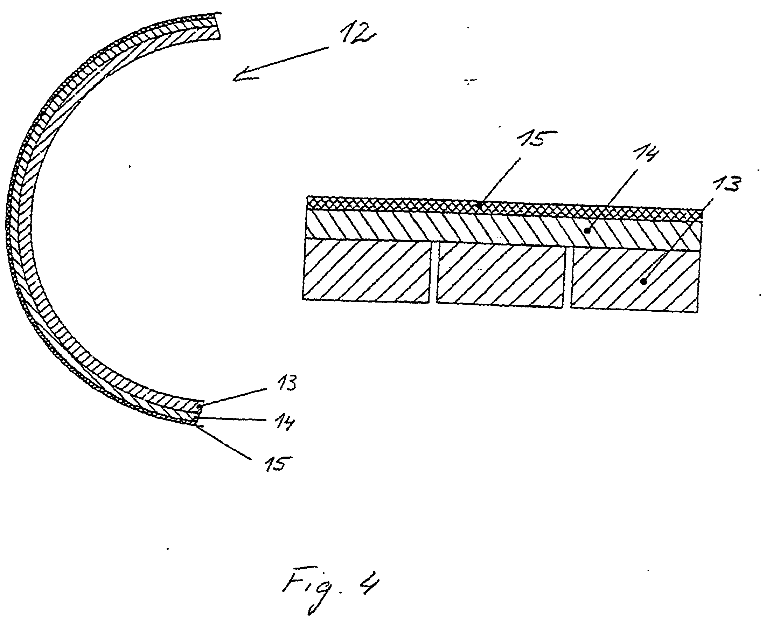

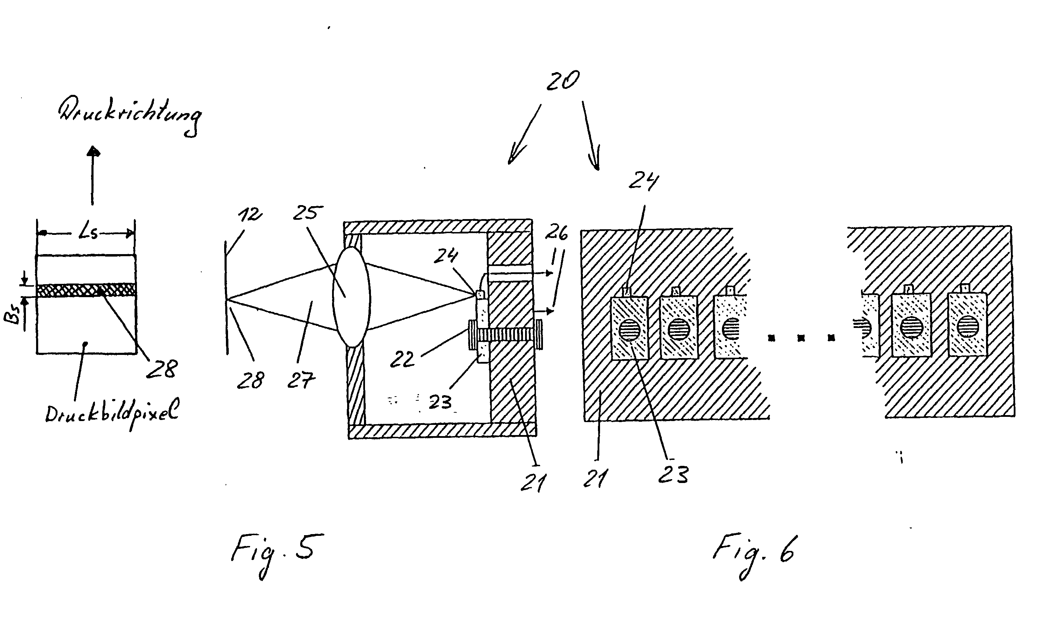

Fig. 5 zeigt eine Belichtungsvorrichtung 20 der Bildübertragungseinrichtung in einem Querschnitt. Fig. 6 zeigt die Belichtungsvorrichtung in einem Längsschnitt.

Die Belichtungsvorrichtung 20 wird durch linienförmig nebeneinander aufgereiht angeordnete Infrarot Laserdioden gebildet, die in einem Gehäuse 21 je mit einem Befestigungsmittel 22 befestigt sind. Jede der Laserdioden wird durch einen Laserchip 23 gebildet mit einer lichtemittierenden Fläche 24. Den lichtemittierenden Flächen 24 gegenüberliegend ist das Gehäuse 21 mit einer überlappenden Lochreihe versehen. In den überlappenden Löchern der Lochreihe sind optische Linsen 25 angeordnet. Jeder Laserchip 23 weist einen elektrischen Anschluss 26 zu einer Ansteuerelektronik auf.

Wie in Fig. 5 zu erkennen ist, wird ein von der lichtemittierenden Fläche 24 eines der Laserchips 23 ausgestrahltes Strahlenbündel 27 von der gegenüberliegenden Linse 25 auf die farbübertragende Oberfläche des Druckforms 12 des Druckformzylinders 2 gebündelt, so dass es dort als schmaler Rechtecklaserspot 28 auftrifft. Die lichtemittierende Fläche 24 entspricht in ihrer Form dem von ihr erzeugten Laserspot 28. Vorzugsweise weist sie auch die gleiche Größe auf. Eine Vergrößerung oder Verkleinerung bis zu einem gewissen Ausmaß kann in der Praxis jedoch auch einmal vorteilhaft sein.

Links neben der Belichtungsvorrichtung 20 ist ein einzelnes Pixel des zu erzeugenden Druckbilds stark vergrößert dargestellt. Ebenfalls dargestellt ist der Laserspot 28 im Druckbildpixel. Die in Zylinderlängsrichtung gemessene Länge Ls des Laserspots 28 entspricht der in die gleiche Richtung gemessenen Länge des einzelnen Druckbildpixels. Die in Druckrichtung gemessene Breite Bs des Laserspots 28 ist um ein Mehrfaches kleiner als die in die gleiche Richtung gemessene Breite des Druckbildpixels. Im Ausführungsbeispiel ist das Druckbildpixel quadratisch mit einer Länge und Breite von je 50 µm. Die Laserspotlänge Ls beträgt ebenfalls 50 µm. Die Laserspotbreite Bs hingegen beträgt 3 µm. Entsprechend lang ist zur Belichtung des Druckbildpixels die Belichtungszeit bzw. Pulsdauer der gepulsten Laserdioden 24. Die Einschaltdauer für die Belichtung eines quadratischen Pixels, das eine Kantenlänge aufweist, die der Laserspotlänge Ls entspricht, ergibt sich aus dem Quotienten der Laserspotlänge Ls und der Oberflächengeschwindigkeit der Druckform 12.

In dem Gehäuse 21 sind 64 Laserdioden 23 in einer Linie angeordnet. Pro Seitenbreite ist solch ein Array mit 64 Laserdioden vorgesehen die gleichmäßig verteilt über knapp eine Seitenbreite nebeneinander angeordnet sind. Bei einer 1.8 m breiten Druckeinheit sind vier solche Arrays entlang einer Linie nebeneinander angeordnet.

Die Bebilderung findet bei einer Drehzahl des Druckformzylinders 2 von vorzugsweise etwa 10,000 U/h statt, wobei jedes der Arrays in seinem Seitenbereich während der Zylinderdrehung in Zylinderlängsrichtung kontinuierlich verschoben wird. Eine schrittweise Verschiebung um eine Pixelspalte nach jeder vollen Umdrehung wäre ebenfalls möglich, jedoch zeitaufwendiger. Der Weg, um den das Laserarray, im Falle von mehreren Laserarrays sämtliche dieser Arrays, pro Zylinderumdrehung horizontal verschoben wird, entspricht dem Kehrwert der Bildauflösung. Bei einer Bildauflösung von beispielsweise 500 dpi wird das Laserarray pro Zylinderumdrehung um 51 µm quer zur Druckrichtung verschoben. Die Laserspotlänge Ls darf nicht kleiner sein als der auflösungsbedingte Vorschub des Laserarrays, um Vollflächen belichten zu können. Die maximale Auflösung ist durch einen Drehwinkelgeber und den Umfang des Druckformzylinders 2 gegeben. Bei dem Drehwinkelgeber handelt es sich um einen Inkrementalgeber, der entweder am Druckfomrzylinder 2 oder dem zugeordneten Gummituchzylinder 1 angeordnet ist und die Drehwinkellage des Zylinders misst. Bei einer Auflösung von 40,000 Schritten pro Zylinderumdrehung und einem Umfang des Druckformzylinders von 1,257 mm ergibt sich eine Auflösung von 798 dpi. Der für die Bebilderung einzusetzende Laserspot 28 muss für diese Auflösung eine Länge Ls von wenigstens 32 µm besitzen.

Die erforderliche Laserleistung zur Verdampfung der Feuchtmittelschicht an der farbübertragenden Oberfläche ist abhängig von der Schichtdicke, der Oberflächengeschwindigkeit des Druckformzylinders 2 und der Geometrie des Laserspots 28. Bei einer Feuchtmittelschichtdicke von 1 µm und einer Oberflächengeschwindigkeit von 3.5 m/s (Radius 200 mm, Rotation mit 10.000 U/h) und einem Laserspot 28 mit einer Länge Ls von 50 µm und einer Breite Bs 3 µm überstreicht der Laserspot 28 bei Vernachlässigung der Verschiebung des Laserarrays in Zylinderlängsrichtung innerhalb von etwa 14 µs ein Fläche von 50 * 50 µm². Auf einer solchen Fläche befindet sich mit Feuchtwasser als Feuchtmittel eine Wassermasse von 2.5 * 10⁻¹² kg. Um Wasser zu verdampfen, wird eine Energie von 2.3 * 10⁶ J/kg benötigt, d.h. 5.8 * 10⁻⁶ J pro Pixel. Soll die Verdampfung in einer Zeit von 14 µs geschehen, so ist eine Leistung von 0.41 W notwendig. Die Erwärmung des Feuchtmittels erfolgt dadurch, dass die Druckschicht 15 aufgeheizt wird. Der Wirkungsgrad für die Laserleistung ist vom Absorptionskoeffizienten, der Wärmekapazität und dem Wärmeleitwiderstand der Druckschicht 15 abhängig. Der Anteil der Laserleistung, der eine Verdunstung von Feuchtmittel von der Druckschicht 15 bewirkt, sollte möglichst hoch sein, vorzugsweise sollte er wenigstens 0.6 oder größer sein. Die Laserleistung pro Diode beträgt wenigstens etwa 0.7 W. Bevorzugt werden 1 W Dioden verwendet.

Da nach der Trocknung an der farbübertragenden Oberfläche die Druckschicht 15 an den getrockneten Stellen eine hohe Temperatur aufweist, kann auch eine Anfeuchtung dieser Stellen nicht unmittelbar erfolgen, weil das nur mit einer geringen Rate nachströmende Feuchtmittel bei Kontakt mit der aufgeheizten Stelle der Druckschicht 15 sofort verdampft. Damit eine Feuchtung der getrockneten Stelle vor Kontakt mit der Farbauftragswalze 3 besonders sicher verhindert wird, ist die Farbauftragswalze 3 unmittelbar nach der Belichtungsvorrichtung 20 angeordnet. Auch sollte der Feuchtmitteldruck an der Rückseite der Druckschicht 15 so eingestellt werden, dass die Feuchtmittelschicht an der farbübertragenden Oberfläche nur langsam gebildet wird. Liegt im vorstehenden Beispiel die Farbauftragswalze 3 in Drehrichtung des Druckformzylinders 2 gesehen 200 mm hinter der Belichtungsvorrichtung 20, so beträgt die Zeitspanne von der Trocknung bis zum Porenverschluss 0.06 s. Die Feuchtmittelzufuhr an der Rückseite der Druckform 12 wird so eingestellt, dass nicht mehr als 0.5g Feuchtmittel pro m² der farbübertragenden Oberfläche und Umdrehung zugeführt werden. Da sich der Feuchtmittelfilm bei jeder Umdrehung an der Farbauftragswalze 3 spaltet und zur Hälfte abgeführt wird, stellt sich dann eine konstante Filmschichtdicke von 1 µm vor der Farbauftragswalze 3 und von 0.5 µm hinter der Farbauftragswalze 3 ein. Mit zunehmender Bebilderungszeit wird die Feuchtmittelzufuhr entsprechend der bereits erreichten Flächendeckung vermindert. Ausgehend von Wasser als Feuchtmittel und einer Feuchtmittelschichtdicke von 1 µm, die zu verdampfen ist, ist eine Bebilderung des Druckformzylinders 2, d.h. von zwei Druckformen 12, in etwa einer Minute möglich. Der Leistungsbedarf der Belichtungsvorrichtung 20 ist in der Verfahrensalternative, in der zum Verschließen der Poren zuvor Feuchtmittel verdampft wird, aufgrund der nur sehr dünnen Feuchtmittelschicht sehr gering.

Pro Druckformzylinder 2, d.h. pro Belichtungsvorrichtung 20, ist eine Ansteuerelektronik vorgesehen zur Erzeugung von Konstantstromimpulsen, deren Dauer der Belichtungszeit für ein Pixel entspricht für jede der 265 Dioden. Die Stromstärke liegt je nach verwendeter Laserdiode zwischen 1 und 4 A. Die Ansteuerelektronik umfasst ferner einen eigenen Bitmapspeicher mit jeder Diode zugeordnetem eigenen Speicherbereich. Ferner umfasst die Ansteuerelektronik ein Adressierungsystem zur Übertragung der Bits aus dem Bitmapspeicher zu den Dioden. Die Adresse für den Speicher wird aus Signalen von einem Drehwinkelgeber des Druckformzylinders 2 oder des Gummituchzylinders 1 und eines Weggebers ermittelt, der die Horizontalverschiebung des Laserarrays, in dem die betreffende Diode angeordnet ist, misst oder dem Motor zur Erzeugung der Horizontalbewegung vorgibt.

Schließlich umfasst die Ansteuerelektronik eine Schnittstelle zu einer Steuer- und Puffereinheit. In der Steuer- und Puffereinheit werden die Daten von zugeordneten Druckformzylindern 2, vorzugsweise von solchen Druckformzylindern 2, die auf die gleiche Seite der Bahn arbeiten, gesammelt. Je nach Übertragungs- und Speicherkapazität können einer Steuer- und Puffereinheit mehrere Druckeinheiten mit je mehreren Druckformzylindern 2 zugeordnet werden.

Die Bebilderung erfolgt wie vorstehend bereits beschrieben durch axiale Verschiebung des Laserarrays entlang dem rotierenden Druckformzylinder 2. Die Geschwindigkeit der Horizontalverschiebung ist erheblich geringer als die Zylindergeschwindigkeit bei der Bebilderung. Falls mehrere der Laserarrays in Zylinderlängsrichtung nebeneinander angeordnet sind, werden sämtliche Laserarrays gleichzeitig, vorzugsweise durch den gleichen Motor, axial verschoben. Bei jeder Umdrehung des Druckzylinders 2 erfolgt ein axialer Vorschub der Belichtungsvorrichtung 20, der etwas geringer ist als die Breite Bs der Laserspots 28. Axial benachbarte Pixel überlagern sich daher geringfügig. Dadurch werden nacheinander die nebeneinanderliegenden Spalten des Druckbilds bebildert, ohne dass zwischen den Spalten unbebilderte Bereiche verbleiben. Die Breite der Überlappung von benachbarten Pixel hängt von der Schärfe der Abbildung des einzelnen Pixels ab. Unschärfe in der optischen Abbildung und Wärmediffusion in der Umgebung des Pixels führen zu einer Belichtungsunschärfe, die durch die Überlagerung bei der Bebilderung ausgeglichen wird.

Die Laserdioden 23 werden mechanisch grobjustiert als Diodenzeile in dem Gehäuse 21 befestigt. Durch das Array der Linsen 25 werden die lichtimittierenden Flächen 24 der Laserdioden 23 auf die Druckform 12 abgebildet. Durch die mechanische Grobjustierung der Laserdioden 23 wird sichergestellt, dass die geometrische Abweichung der Laserspots 28 auf der farbübertragenden Oberfläche der Druckform 12 eine bestimmte Maximalabweichung von Sollpositionen nicht überschreitet. Eine Feinjustierung erfolgt im Wege einer Software-Justierung.

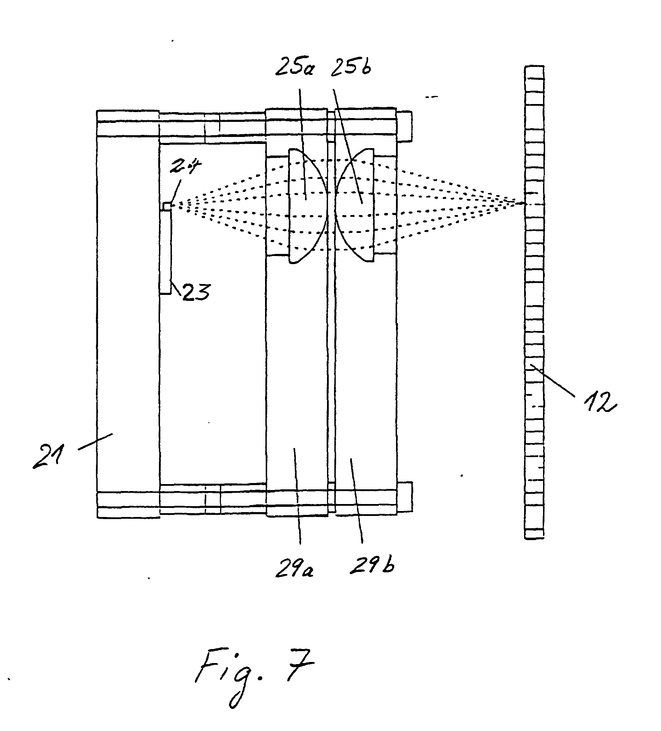

Figur 7 zeigt eine Belichtungseinrichtung, die der Belichtungseinrichtung der Figuren 5 und 6 mit Ausnahme der optischen Abbildungseinrichtung vollkommen gleicht. Die optische Abbildungseinrichtung der Belichtungseinrichtung der Figur 7 wird für jede der lichtemittierenden Flächen 24 durch je zwei Plan-Konvex-Linsen 25a und 25b gebildet. Die gewölbten Flächen der Linsen 25a und 25b stehen sich jeweils gegenüber, so dass die planen Flächen der Linsen 25a und 25b diejenigen Flächen sind, durch die das Laserlicht von den lichtemittierenden Flächen 24 eintritt und durch die es in Richtung auf die farbübertragende Oberfläche der Druchschicht 15 hin aus der optischen Abbildungseinrichtung austritt.

Die Brennweiten der Linsen 25 bzw. 25a und 25b der optischen Abbildungseinrichtungen der Figuren 5 bis 7 sind vorzugsweise für beide Richtungen gleich. Dies wird durch die schmale Streifenform der lichtemittierenden Flächen 24 ermöglicht. Im Ausführungsbeispiel der Figur 7 werden durch die Verwendung gleicher Linsen 25a und 25b die Fertigungskosten niedrig gehalten. Insbesondere sind Plan-Konvex-Linsen preiswerter als Linsen, die auf beiden Seiten geschliffen werden müssen. Die Linsen 25a und 25b können vorteilhafterweise durch zwei Kunststofflinsenarrays erhalten werden, die wie in Figur 7 gezeigt zueinander in Linsenhaltern 29a und 29b angeordnet sind.

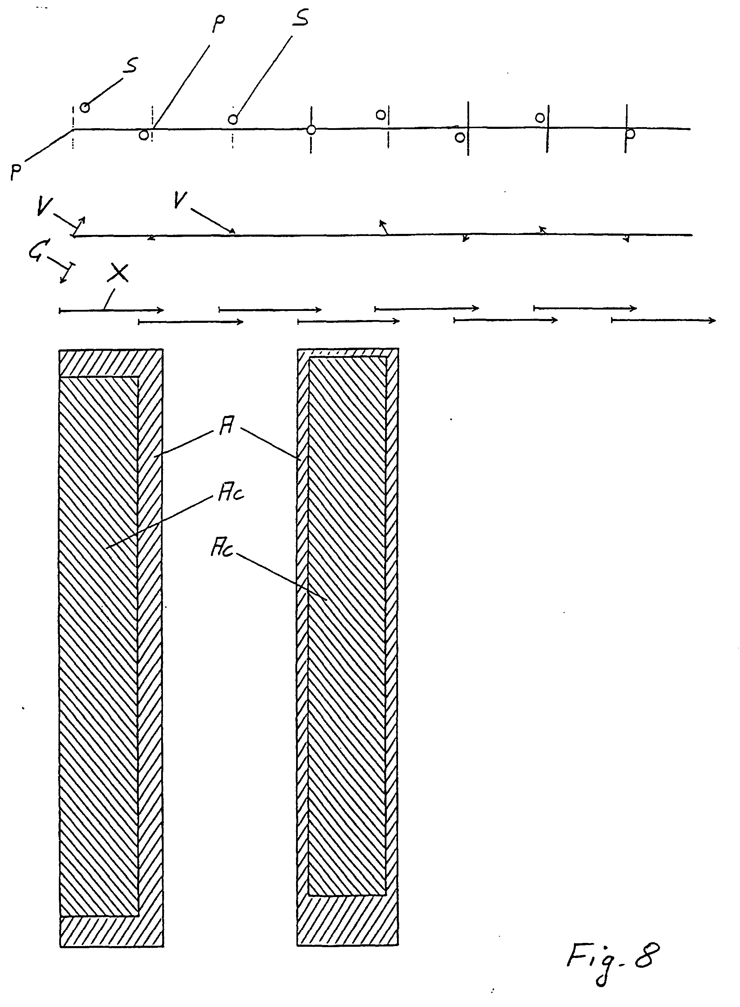

In Figur 8 ist die Software-Justierung für mehrere auf einer Linie nebeneinander angeordnete Laserdioden 23 eines Laserarrays dargestellt.

Die eingetragenen Linien im oberen Teil der Figur 8 verlaufen in Zylinderlängsrichtung. Entlang der obersten Linie sind die Sollpositionen P der Laserspots 28 zusammen mit den sich nach der mechanischen Grobjustierung ergebenden Istpositionen S der gleichen Laserspots 28 eingezeichnet.

Unmittelbar darunter ist die gleiche Linie nochmals eingezeichnet. Entlang dieser Linie ist der Fehlervektor V für jede der Laserdioden 23 eingetragen. Jeder der Fehlervektoren V ergibt sich als gerade Verbindungslinie zwischen der Sollposition P und der ausgemessenen Istposition S für jede der Laserdioden 23. Aus den Fehlervektoren V wird je ein von der zugehörigen Sollposition P ausgehender Korrekturvektor C gleicher Länge und entgegengesetzter Richtung gebildet. Eingezeichnet ist in Figur 8 lediglich der Korrekturvektor C für die in Figur 8 äußere linke Laserdiode 23 des Laserarrays. Die Bildung der Korrekturvektoren C für die weiteren der Laserdioden 23 erfolgt entsprechend. Als dritter Linienzug ist pro Laserdiode 23 der Verschiebeweg X eingetragen, um den das Laserarray bei der Bebilderung des Druckformzylinders 2 in Zylinderlängsrichtung insgesamt verschoben wird. Diese Verschiebung kann schrittweise jeweils nach Vollendung einer Zylinderumdrehung erfolgen oder aber, was bevorzugt wird, kontinuierlich während der gesamten Bebilderungszeit des Druckformzylinders 2. Der Verschiebeweg X ist geringfügig länger als der in Zylinderlängsrichtung gemessene Abstand zwischen den Istpositionen P von benachbarten Laserdioden 23.

Jeder der Laserdioden 23 ist ein Bildbereich Ac zugeordnet, der einem sich in Umfangsrichtung des Druckformzylinders 2 erstreckenden Bildstreifen entspricht. Die in Längsrichtung des Druckformzylinders 2 gemessene Länge dieses zugeordneten Bildbereichs Ac entspricht dem Sollabstand zwischen zwei benachbarten Laserdioden 23. Jeder der Laserdioden 23 ist ein Datenspeicher in der Ansteuerelektronik zugeordnet. Dieser Speicher ist größer als der zu übertragende Bildbereich Ac. Er umfasst den sogenannten Bebilderungsbereich A, der in Längs- und Umfangsrichtung des Druckformzylinders 2 je um die maximale Fehlertoleranz für die mechanische Grobjustierung größer ist als der Bildbereich Ac. Weist eine Laserdiode 23 eine exakte Übereinstimmung der Istposition S des von ihr erzeugten Laserspots 28 auf, so werden die Bilddaten des Speichers für diese Laserdiode 23 in den Datenspeicher für die Bebilderung übertragen. Dies ist in Figur 8 für die vierte Laserdiode 23 von links der Fall. Die Positionierung ihres Bildbereichs Ac im zugeordneten Belichtungsbereich A ist im Vergleich zu der äußeren linken Laserdiode 23 in Figur 8 dargestellt. Der Fehlervektor C der äußeren linken Laserdiode 23 weist in Zylinderlängsrichtung eine sich aus der Grobjustierung ergebende maximal zulässige Abweichung auf. Dementsprechend ist ihr Bildbereich Ac in Zylinderslängsrichtung an den linken Rand des zugeordneten Belichtungsbereichs A verschoben. Diese Verschiebung erfolgt durch entsprechende softwaremäßige Addressierung des Datenspeichers, der dieser Laserdiode 23 zugeordnet ist. Durch diese Software-Justierung wird der Bildbereich Ac, in dem gelasert wird, für jede Laserdiode 23 individuell im jeweils zugeordneten Belichtungsbereich A positioniert.

Die in Zylinderlängsrichtung gemessene Länge jedes der Belichtungsbereiche A entspricht dem Verschiebeweg X der Längsverschiebung des Laserarrays. Die in Zylinderumfangsrichtung gemessene Breite entspricht dem Zylinderumfang plus der maximal zulässigen Abweichung durch die mechanische Grobjustierung. Indem die Bildbereiche Ac mittels der Software-Justierung um die jeweiligen Korrekturvektoren C durch entsprechende Verschiebung des Addressbereichs innerhalb des jeweils zugeordneten Belichtungsbereichs A softwaremäßig verschoben werden, wird die exakte Positionierung jedes der Laserspots 28 auf der farbübertragenden Oberfläche durch mechanische Grobjustierung und softwaremäßige Feinjustierung präzise erhalten.

### Bezugszeichenliste

- 1: Gummituchzylinder
- 2: Druckformzylinder
- 3: Farbwalze
- 4: axialer Hohlraum
- 5: radiale Kanäle, Bohrungen
- 6: Spannvorrichtung
- 7 - 9: ----
- 10: Trägerzylinder
- 11: ----
- 12: Druckform
- 13: Druckformträger
- 14: Unterschicht
- 15: Druckschicht
- 16 - 19: ---
- 20: Belichtungsvorrichtung
- 21: Gehäuse
- 22: Befestigungsmittel
- 23: Laserchip
- 24: lichtemittierende Fläche
- 25: Linse
- 26: elektrischer Anschluss
- 27: Strahlenbündel
- 28: Laserspot
- 29: Linsenhalter
- 30: Wascheinrichtung
- B: Bahn
- P: Sollposition
- S: Istposition
- V: Fehlervektor
- C: Korrekturvektor
- X: Verschiebeweg
- A: Belichtungsbereich
- Ac: Bildbereich

## Patentansprüche

1. Belichtungsverfahren zur Bebilderung einer Druckform für einen Nassoffsetdruck, bei dem die Druckform (12) und ein Array von gepulsten Halbleiterlasern (23) eine nach Richtung und Geschwindigkeit vorgegebene Relativbewegung ausführen, bei der eine zu bebildernde Oberfläche der Druckform (12) pixelweise bildgemäß mittels der Halbleiterlaser (23) belichtet wird,
**dadurch gekennzeichnet, dass**
a) mittels der Halbleiterlaser (23) schmale, streifenförmige Laserspots (28) erzeugt werden, die auf der zu bebildernden Oberfläche der Druckform (12) je eine in Richtung der Relativbewegung gemessene Laserspotbreite (Bs) aufweisen, die mehrfach kleiner ist als eine in die gleiche Richtung gemessene Breite eines Bildpixels der zu bebildernden Oberfläche und auch mehrfach kleiner ist als eine quer zu der Laserspotbreite (Bs) gemessene Laserspotlänge (Ls) des gleichen Laserspots (28), wobei die Laserspotlänge (Ls) und/oder die Breite des Bildpixels ein ganz- oder unganzzahliges Vielfaches der Laserspotbreite (Bs) ist, und dass
b) eine Pulsdauer pro Laserspot (28) mehrfach länger ist als eine Zeitdauer, in der bei der Relativbewegung eine Wegstrecke zurückgelegt wird, die der Laserspotbreite (Bs) entspricht.

2. Belichtungsverfahren nach Anspruch 1, **dadurch gekennzeichnet, dass** die zu bebildernde Oberfläche der Druckform (12) mit einem Feuchtmittel benetzt und mittels der Halbleiterlaser (23) bildgemäß getrocknet wird.

3. Belichtungsverfahren nach einem der vorhergehenden Ansprüche, **dadurch gekennzeichnet, dass** auf der zu bebildernden Oberfläche der Druckform (12) ein Feuchtmittelfilm gebildet wird, der im Mittel höchstens 1 µm dick ist.

4. Belichtungsverfahren nach Anspruch 1, **dadurch gekennzeichnet, dass**
auf die zu bebildernde Oberfläche der Druckform (12) ein fließfähiges Material gleichmäßig aufgebracht wird, das Druckfarbe annimmt und
mittels der Halbleiterlaser (23) dieses Material bildgemäß belichtet und **dadurch** an belichteten Stellen zum Härten gebracht wird.

5. Belichtungsverfahren nach dem vorhergehenden Anspruch, **dadurch gekennzeichnet, dass** das fließfähige Material Feuchtmittel abweist.

6. Belichtungsverfahren nach Anspruch 4, **dadurch gekennzeichnet, dass** als das fließfähige Material ein Material gewählt wird, das wieder erweicht oder aufgelöst werden kann, nachdem es durch Belichtung mittels der Halbleiterlaser (23) zum Härten gebracht wurde.

7. Belichtungsverfahren nach dem vorhergehenden Anspruch, **dadurch gekennzeichnet, dass** das erzeugte Druckbild mittels der Halbleiterlaser (23) bildgemäß belichtet und das erhärtete Material **dadurch** gelöst und anschließend mittels Feuchtmittel von der Druckform (12) entfernt wird.

8. Belichtungsverfahren nach einem der vorhergehenden Ansprüche, **dadurch gekennzeichnet, dass** ein rechteckförmiger Laserspot (28) verwendet wird.

9. Belichtungsverfahren nach einem der vorhergehenden Ansprüche, **dadurch gekennzeichnet, dass** die Laserspotlänge (Ls) auf der zur bebildernden Oberfläche der Druckform (12) zwischen 30 und 90 µm und die Laserspotbreite (Bs) zwischen 1 und 10 µm beträgt.

10. Belichtungsverfahren nach einem der vorhergehenden Ansprüche, **dadurch gekennzeichnet, dass** die Bildpixelbreite auf der zu bebildernden Oberfläche der Druckform (12) das wenigstens Zehnfache, vorzugsweise das wenigstens Zwanzigfache, der Laserspotbreite (Bs) beträgt.

11. Belichtungsvorrichtung zur Bebilderung einer Druckform (12) für einen Nassoffsetdruck, wobei die Druckform und die Belichtungsvorrichtung (20) oder zumindest lichtemittierende Elemente (23) der Belichtungsvorrichtung (20) eine nach Richtung und Geschwindigkeit vorgegebene Relativbewegung ausführen, bei der eine zu bebildernde Oberfläche der Druckform (12) pixelweise bildgemäß belichtet wird, die Belichtungsvorrichtung (20) umfassend:
a) eine optische Abbildungseinrichtung, die Laserlicht der lichtemittierenden Flächen (24) zu Laserspots (28) fokussiert, und
b) ein Gehäuse (21), in oder an dem die Halbleiterlaser (23) in solch einer Ausrichtung befestigt sind, dass ihre lichtemittierenden Flächen (24) parallele Längsrichtungen aufweisen,
**dadurch gekennzeichnet, dass**
die Belichtungsvorrichtung (20) umfasst:
c) gepulste Halbleiterlaser (23) mit lichtemittierenden, schmalen, streifenförmigen Flächen (24), die je eine in Richtung der Relativbewegung gemessene Breite (Be) aufweisen, die mehrfach kleiner ist als eine in die gleiche Richtung gemessene Breite eines Bildpixels auf der zu bebildernden Oberfläche und auch mehrfach kleiner ist als eine Länge (Le) der gleichen lichtemittierenden Fläche (24), wobei die Breite des Bildpixels und/oder die Länge (Le) ein ganz- oder unganzzahliges Vielfaches der Breite (Be) der lichtemittierenden Fläche ist, und
d) eine Ansteuerelektronik, mit der die Halbleiterlaser (23) so angesteuert werden, dass eine Laserpulsdauer der Halbleiterlaser (23) mehrfach länger ist als eine Zeitdauer, in der bei der Relativbewegung eine Wegstrecke zurückgelegt wird, die der Breite (Be) der lichtemittierenden Flächen (24) entspricht.

12. Belichtungsvorrichtung nach dem vorhergehenden Anspruch, **dadurch gekennzeichnet, dass** eine rechteckförmige lichtemittierende Fläche (24) verwendet wird.

13. Belichtungsvorrichtung nach einem der zwei vorhergehenden Ansprüche, **dadurch gekennzeichnet, dass** eine Länge (Ls) eines Laserspots (28) genauso groß ist wie die quer zur Richtung der Relativbewegung gemessene Länge eines Bildpixels auf der farbübertragenden Oberfläche.

14. Belichtungsvorrichtung nach einem der drei vorhergehenden Ansprüche, **dadurch gekennzeichnet, dass** die Abbildungseinrichtung (25) ein Linsenarray ist, das für jede der lichtemittierenden Flächen (24) je wenigstens eine optische Linse umfasst.

15. Belichtungsvorrichtung nach einem der vier vorhergehenden Ansprüche, **dadurch gekennzeichnet, dass** die Abbildungseinrichtung (25) ein Linsenarray aus Kunststoff ist.

16. Belichtungsvorrichtung nach einem der fünf vorhergehenden Ansprüche, **dadurch gekennzeichnet, dass** die Belichtungsvorrichtung (20) in einer Rotationsdruckmaschine angeordnet ist und während einer Direktbebilderung in Längsrichtung eines die Druckform (12) tragenden, rotierenden Druckformzylinders (2) verschoben wird.

## Claims

1. A method of exposure for imaging a forme for wet offset printing, in which the forme (12) and an array of pulsed semiconductor lasers (23) perform a relative movement which is pre-set with respect to the direction and speed and in which a surface of the forme (12) to be imaged is exposed pixel-wise by means of the semiconductor lasers (23) in accordance with the image,
**characterized in that**
a) narrow, stripe-shaped laser spots (28) are produced by means of the semiconductor lasers (23), the laser spots (28) each having, on the surface of the forme (12) to be imaged, a respective width (**Bs**) which is measured in the direction of the relative movement and which is several times smaller than a width - measured in the same direction - of an image pixel of the surface to be imaged and is also several times smaller than a length (**Ls**) - measured transversely to the laser-spot width (**Bs**) - of the same laser spot (28), wherein the laser-spot length (**Ls**) and/or the width of the image pixel is or are an integral or non-integral multiple of the laser-spot width (**Bs**), and
b) a pulse duration per laser spot (28) is several times longer than a time period in which, during the relative movement, a path is covered which corresponds to the laser-spot width (**Bs**).

2. A method of exposure according to Claim 1, **characterized in that** the surface of the forme (12) to be imaged is wetted with a moistening agent and is dried in accordance with the image by means of the semiconductor lasers (23).

3. A method of exposure according to one of the preceding Claims, **characterized in that** a film of moistening agent, which on average is at most 1 µm thick, is formed on the surface of the forme (12) to be imaged.

4. A method of exposure according to Claim 1, **characterized in that** a free-flowing material, which accepts the printing ink, is applied uniformly to the surface of the forme (12) to be imaged, and the said material is exposed in accordance with the image by means of the semiconductor lasers (23) and, as a result, is caused to harden at exposed places.

5. A method of exposure according to the preceding Claim, **characterized in that** the free-flowing material repels moistening agents.

6. A method of exposure according to Claim 4, **characterized in that** a material, which can be softened again or dissolved after it has been caused to harden by exposure by means of the semiconductor lasers (23), is selected as the free-flowing material.

7. A method of exposure according to the preceding Claim, **characterized in that** the print image produced is exposed in accordance with the image by means of the semiconductor lasers (23) and the hardened material is thereby dissolved and is then removed from the forme (12) by moistening agents.

8. A method of exposure according to one of the preceding Claims, **characterized in that** a rectangular laser spot (28) is used.

9. A method of exposure according to one of the preceding Claims, **characterized in that** the laser-spot length (**Ls**) on the surface of the forme (12) to be imaged amounts to between 30 and 90 µm and the laser-spot width (**Bs**) to between 1 and 10 µm.

10. A method of exposure according to one of the preceding Claims, **characterized in that** the image-pixel width on the surface of the forme (12) to be imaged amounts to at least 10 times, and preferably to at least 20 times, the laser-spot width (**Bs**).

11. An exposure device for imaging a forme (12) for wet offset printing, wherein the forme and the exposure device (20) or at least light-emitting element (23) of the exposure device (20) perform a relative movement which is pre-set with respect to the direction and speed and in which a surface of the forme (12) to be imaged is exposed pixel-wise in accordance with the image, the exposure device (20) comprising:
a) an optical image-formation device which focusses laser light of the light-emitting faces (24) to form laser spots (28), and
b) a casing (21) in or on which the semiconductor lasers (23) are secured with such an orientation that their light-emitting faces (24) have parallel longitudinal directions,
**characterized in that**
the exposure device (20) comprises:
c) pulsed semiconductor lasers (23) with narrow, stripe-shaped light-emitting faces (24) which each have a respective width (**Be**) which is measured in the direction of the relative movement and which is several times smaller than a width - measured in the same direction - of an image pixel on the surface to be imaged and is also several times smaller than a length (**Le**) of the same light-emitting face (24), wherein the width of the image pixel and/or the length (**Le**) is or are an integral or non-integral multiple of the width (**Be**) of the light-emitting face, and
d) an electronic control means by which the semiconductor lasers (23) are controlled in such a way that a laser-pulse duration of the semiconductor lasers (23) is several times longer than a time period in which, during the relative movement, a path is covered which corresponds to the width (**Be**) of the light-emitting faces (24).

12. An exposure device according to the preceding Claim, **characterized in that** a rectangular light-emitting face (24) is used.

13. An exposure device according to one of the two preceding Claims, **characterized in that** a length (**Ls**) of the laser spot (28) is exactly as large as the length - measured transversely to the direction of the relative movement - of an image pixel on the ink-transfer surface.

14. An exposure device according to one of the three preceding Claims, **characterized in that** the image-formation device (25) is a lens array which comprises at least one respective optical lens for each of the light-emitting faces (24).

15. An exposure device according to one of the four preceding Claims, **characterized in that** the image-formation device (25) is a lens array of plastics material.

16. An exposure device according to one of the five preceding Claims, **characterized in that** the exposure device (20) is arranged in a rotary printing press and during a direct imaging is displaced in the longitudinal direction of a rotating forme cylinder (2) which carries the forme (12).

## Revendications

1. Procédé d'exposition pour produire une image sur une forme d'impression pour l'impression offset humide, suivant lequel la forme (12) d'impression et un réseau de lasers (23) semi-conducteurs pulsés accomplissent un mouvement relatif de direction et de vitesse prescrites au cours duquel une surface, sur laquelle une image doit être produite, de la forme (12) d'impression est exposée au moyen des lasers (23) semi-conducteurs pixel par pixel conformément à l'image,
**caractérisé en ce que**
a) des points (28) laser étroits, en forme de bandes, sont produits au moyen des lasers (23) semi-conducteurs, points qui possèdent chacun, sur ladite surface de la forme (12) d'impression, une largeur (Bs) de point laser, mesurée dans la direction du mouvement relatif, qui est plusieurs fois inférieure à une largeur, mesurée dans la même direction, d'un pixel d'image de ladite surface, et qui est également plusieurs fois inférieure à une longueur (Ls) de point laser du même point (28) laser mesurée transversalement à la largeur (Bs) de point laser, sachant que la longueur (Ls) de point laser et/ou la largeur du pixel d'image est/sont un multiple entier ou non entier de la largeur (Bs) de point laser,
et **en ce que**
b) une durée d'impulsion par point (28) laser est plusieurs fois plus longue qu'un intervalle de temps au cours duquel est parcourue, lors du mouvement relatif, une distance qui correspond à la largeur (Bs) de point laser.

2. Procédé d'exposition suivant la revendication 1, **caractérisé en ce que** ladite surface de la forme (12) d'impression est imprégnée d'un agent humidifiant et est, au moyen des lasers (23) semi-conducteurs, séchée conformément à l'image.

3. Procédé d'exposition suivant l'une des revendications précédentes, **caractérisé en ce qu'**un film d'agent humidifiant, qui a en moyenne une épaisseur maximale de 1 µm, est formé sur ladite surface de la forme (12) d'impression.

4. Procédé d'exposition suivant la revendication 1, **caractérisé en ce qu'**un matériau coulant qui accepte l'encre d'imprimerie est appliqué uniformément sur ladite surface de la forme (12) d'impression et, au moyen des lasers (23) semi-conducteurs, ce matériau est exposé conformément à l'image, de sorte qu'il durcit aux emplacements exposés.

5. Procédé d'exposition suivant la revendication précédente, **caractérisé en ce que** le matériau coulant repousse l'agent humidifiant.

6. Procédé d'exposition suivant la revendication 4, **caractérisé en ce qu'**on choisit comme matériau coulant un matériau qui peut être ramolli ou dissous après avoir été durci par l'exposition au moyen des lasers (23) semi-conducteurs.

7. Procédé d'exposition suivant la revendication précédente, **caractérisé en ce que** l'image d'impression produite est exposée conformément à l'image au moyen des lasers (23) semi-conducteurs, et le matériau durci est ainsi dissous puis enlevé de la forme (12) d'impression au moyen d'agent humidifiant.

8. Procédé d'exposition suivant l'une des revendications précédentes, **caractérisé en ce qu'**on utilise un point (28) laser rectangulaire.

9. Procédé d'exposition suivant l'une des revendications précédentes, **caractérisé en ce que** la longueur (Ls) de point laser sur ladite surface de la forme (12) d'impression est comprise entre 30 et 90 µm, et la largeur (Bs) de point laser entre 1 et 10 µm.

10. Procédé d'exposition suivant l'une des revendications précédentes, **caractérisé en ce que** la largeur de pixel d'image sur ladite surface de la forme (12) d'impression est égale à au moins dix fois, de préférence à au moins vingt fois, la largeur (Bs) de point laser.

11. Dispositif d'exposition pour produire une image sur une forme (12) d'impression pour l'impression offset humide, dans lequel la forme d'impression et le dispositif (20) d'exposition ou au moins des éléments électroluminescents (23) du dispositif (20) d'exposition accomplissent un mouvement relatif de direction et de vitesse prescrites au cours duquel une surface, sur laquelle une image doit être produite, de la forme (12) d'impression est exposée pixel par pixel conformément à l'image, le dispositif (20) d'exposition comprenant :
a) un équipement de reproduction optique, qui focalise la lumière laser des surfaces (24) électroluminescentes en points (28) laser,
b) un boîtier (21), dans ou sur lequel les lasers (23) semi-conducteurs sont fixés dans une orientation telle que leurs surfaces (24) électroluminescentes possèdent des directions longitudinales parallèles,
**caractérisé en ce que** le dispositif (20) d'exposition comprend :
c) des lasers (23) semi-conducteurs pulsés ayant des surfaces (24) électroluminescentes étroites, en forme de bandes, qui possèdent chacune une largeur (Be), mesurée dans la direction du mouvement relatif, qui est plusieurs fois inférieure à une largeur, mesurée dans la même direction, d'un pixel d'image sur la surface sur laquelle une image doit être produite, et qui est également plusieurs fois inférieure à une longueur (Le) de la même surface (24) électroluminescente, sachant que la largeur du pixel d'image et/ou la longueur (Le) est/sont un multiple entier ou non entier de la largeur (Be) de la surface électroluminescente, et
d) un équipement électronique d'asservissement par lequel les lasers (23) semi-conducteurs sont asservis de telle sorte qu'une durée d'impulsion laser est plusieurs fois plus longue qu'un intervalle de temps au cours duquel est parcourue, lors du mouvement relatif, une distance qui correspond à la largeur (Be) des surfaces (24) électroluminescentes.

12. Dispositif d'exposition suivant la revendication précédente, **caractérisé en ce qu'**on utilise une surface (24) électroluminescente rectangulaire.

13. Dispositif d'exposition suivant l'une des deux revendications précédentes, **caractérisé en ce qu'**une longueur (Ls) d'un point (28) laser est exactement égale à la longueur, mesurée transversalement à la direction du mouvement relatif, d'un pixel d'image sur la surface de transfert d'encre.

14. Dispositif d'exposition suivant l'une des trois revendications précédentes, **caractérisé en ce que** l'équipement (25) de reproduction est un réseau de lentilles qui comprend au moins une lentille optique respective pour chacune des surfaces (24) électroluminescentes.

15. Dispositif d'exposition suivant l'une des quatre revendications précédentes, **caractérisé en ce que** l'équipement (25) de reproduction est un réseau de lentilles en matière plastique.

16. Dispositif d'exposition suivant l'une des cinq revendications précédentes, **caractérisé en ce que** le dispositif (20) d'exposition est disposé dans une rotative d'impression et est, pendant une production directe d'image, déplacé dans la direction longitudinale d'un cylindre (2) porte-forme rotatif portant la forme (12) d'impression.
